(19) Europäisches Patentamt
European Patent Office
Office européen des brevets

(11) **EP 3 452 858 B1**

(12) **EUROPÄISCHE PATENTSCHRIFT**

(45) Veröffentlichungstag und Bekanntmachung des Hinweises auf die Patenterteilung:
**10.08.2022  Patentblatt 2022/32**

(21) Anmeldenummer: **17719596.3**

(22) Anmeldetag: **26.04.2017**

(51) Internationale Patentklassifikation (IPC):
**G02B 21/14** *(2006.01)*    **G02B 21/36** *(2006.01)*
**G06T 5/00** *(2006.01)*    **G02B 21/06** *(2006.01)*
**G06T 5/50** *(2006.01)*

(52) Gemeinsame Patentklassifikation (CPC):
**G02B 21/06; G02B 21/14; G02B 21/367; G06T 5/001; G06T 5/50;** G06T 2207/10056; G06T 2207/30024

(86) Internationale Anmeldenummer:
**PCT/EP2017/059949**

(87) Internationale Veröffentlichungsnummer:
**WO 2017/191011 (09.11.2017 Gazette 2017/45)**

(54) **ARTEFAKTREDUKTION BEI DER WINKELSELEKTIVEN BELEUCHTUNG**

ARTEFACT REDUCTION DURING ANGULARLY-SELECTIVE ILLUMINATION

RÉDUCTION DES ARTEFACTS LORS D'UN ÉCLAIRAGE SÉLECTIF EN FONCTION DE L'ANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2016   DE 102016108079**

(43) Veröffentlichungstag der Anmeldung:
**13.03.2019   Patentblatt 2019/11**

(73) Patentinhaber: **Carl Zeiss Microscopy GmbH 07745 Jena (DE)**

(72) Erfinder:
• **STOPPE, Lars**
**07743 Jena (DE)**
• **SCHMIDLIN, Moritz**
**8953 Dietikon (CH)**
• **KRAMPERT, Gerhard**
**Pleasanton, CA 94566 (US)**
• **WICKER, Kai**
**07743 Jena (DE)**

(74) Vertreter: **Neusser, Sebastian**
**Kraus & Weisert**
**Patentanwälte PartGmbB**
**Thomas-Wimmer-Ring 15**
**80539 München (DE)**

(56) Entgegenhaltungen:
| | |
|---|---|
| EP-A1- 2 339 534 | WO-A1-02/25929 |
| WO-A1-2006/060509 | WO-A1-2016/005571 |
| DE-A1-102014 112 242 | JP-A- 2002 189 174 |
| US-A1- 2004 070 990 | US-A1- 2013 004 065 |
| US-A1- 2014 333 997 | |

**Beschreibung**

TECHNISCHES GEBIET

Verschiedene weitere Ausführungsformen der Erfindung betreffen ein Verfahren, bei dem für jedes von mehreren Messbild eine Artefaktreduktion durchgeführt wird, bevor anschließend die verschiedenen Messbilder zum Erhalten eines Ergebnisbilds kombiniert werden. Beispielsweise kann das Ergebnisbild einen Phasenkontrast aufweisen.

HINTERGRUND

In der optischen Bildgebung von Objekten kann es häufig erstrebenswert sein, ein sogenanntes Phasenkontrastbild zu erzeugen. In einem Phasenkontrastbild ist zumindest ein Teil des Bildkontrasts durch eine Phasenverschiebung des Lichts durch das abgebildete Objekt bedingt. Damit können insbesondere solche Objekte mit vergleichsweise höheren Kontrast abgebildet werden, die keine oder nur eine geringe Schwächung der Amplitude des Lichts bewirken, jedoch eine signifikante Phasenverschiebung (Phasenobjekte). Typischerweise können biologische Proben als Objekt in einem Mikroskop eine größere Phasenänderung als Amplitudenänderung des elektromagnetischen Felds bewirken.
Es sind verschiedene Techniken zur Phasenkontrast-Bildgebung bekannt, etwa die Dunkelfeldbeleuchtung, die schiefe Beleuchtung, der Differenzieller Interferenzkontrast (DIC) oder der Zernike-Phasenkontrast. Weitere Techniken wären z.B. die sog. Schlieren-Methode (engl. knife edge) oder der helikale Phasenkontrast.
Solch vorgenannte Techniken weisen diverse Nachteile oder Einschränkungen auf. So ist es bei der DIC-Technik, der Zernike-Technik, der Schlieren-Methode und dem helikalen Phasenkontrast typischerweise notwendig, gegenüber konventioneller Amplituden-Bildgebung zusätzliche optische Elemente zwischen Probe und Detektor im Bereich der sogenannten Detektionsoptik bereitzustellen. Die kann zu konstruktiven Einschränkungen insbesondere bei modular aufgebauten Mikroskopen führen. Kosten werden typischerweise erhöht. Bei dünnen Proben tragen bei einer Dunkelfeldbeleuchtung typischerweise nur wenige Photonen zur Bildentstehung bei, was zu verrauschten Bildern mit geringerer Qualität führen kann. Eine nachfolgende Auswertung oder Analyse der Bilder kann nicht oder nur eingeschränkt möglich sein. Eine schiefe Beleuchtung führt typischerweise zu einer unsymmetrischen Kontraststeigerung, was wiederum eine verringerte Qualität der Bilder bewirken kann.
Deshalb sind auch Techniken bekannt, um ein Phasenkontrastbild durch digitale Nachbearbeitung zu erzeugen. Zum Beispiel sind aus DE 10 2014 112 242 A1 Techniken bekannt, um durch Kombinieren von mehreren erfassten Intensitätsbildern ein Phasenkontrastbild zu erzeugen. Dabei sind die verschiedenen Intensitätsbilder mit unterschiedlichen Beleuchtungsrichtungen assoziiert. Solche Techniken werden manchmal als winkelselektive Beleuchtung bezeichnet.
Bei der Phasenkontrast-Bildgebung mittels winkelselektiver Beleuchtung kann es vorkommen, dass sich Verunreinigungen im Strahlengang negativ auf die Qualität des Phasenkontrastbilds auswirken. Insbesondere wurde beobachtet, dass Verunreinigungen im Strahlengang als ausgedehntes Muster im Phasenkontrastbild in Erscheinung treten können, wenn diese beabstandet gegenüber einer Fokusebene eines Objektivs der optischen Vorrichtung (defokussiert) angeordnet sind.
Entsprechende Nachteile können auch für andere Bildgebungs-Techniken im Zusammenhang mit winkelselektiver Beleuchtung auftreten, z.B. im Zusammenhang mit der Hellfeld-Bildgebung.

ZUSAMMENFASSUNG

Deshalb besteht ein Bedarf für verbesserte Techniken zur Bildgebung mittels winkelselektiver Beleuchtung. Manchmal wird die winkelselektive Beleuchtung auch als strukturierte Beleuchtung bezeichnet. Insbesondere besteht ein Bedarf für solche Techniken, welche eine Reduktion von Artefakten aufgrund von Verunreinigungen im Strahlengang ermöglichen.
Diese Aufgabe wird von den Merkmalen der unabhängigen Patentansprüche gelöst. Die Merkmale der abhängigen Patentansprüche definieren Ausführungsformen.
In einem Beispiel, das nicht Teil der Erfindung ist, umfasst eine optische Vorrichtung einen Probenhalter, ein Beleuchtungsmodul und einen Filter. Der Probenhalter ist eingerichtet, um ein Objekt im Strahlengang der optischen Vorrichtung zu fixieren. Das Beleuchtungsmodul umfasst mehrere Lichtquellen. Das Beleuchtungsmodul ist eingerichtet, um das Objekt aus mehreren Beleuchtungsrichtungen durch Betreiben der Lichtquellen zu beleuchten. Jede Beleuchtungsrichtung weist ein zugeordnetes Leuchtfeld auf. Der Filter ist zwischen dem Beleuchtungsmodul und dem Probenhalter angeordnet. Der Filter ist eingerichtet, um für jede Beleuchtungsrichtung das zugeordnete Leuchtfeld aufzuweiten.
Beispielsweise kann die optische Vorrichtung ein Mikroskop sein. Es wäre zum Beispiel möglich, dass die optische Vorrichtung zur Auflicht-Bildgebung und/oder zur Durchlicht-Bildgebung eingerichtet ist. Die optische Vorrichtung kann zum Beispiel ein Okular und/oder ein Objektiv umfassen. Die optische Vorrichtung könnte zum Beispiel ein weiteres Beleuchtungsmodul umfassen, zum Beispiel mit einem Laser zur Fluoreszenz-Bildgebung.

Das Objekt kann zum Beispiel ein Phasenobjekt sein, wie beispielsweise eine biologische Probe. Zum Beispiel könnte eine entsprechende biologische Probe ein oder mehrere Zellkulturen umfassen.

Das Leuchtfeld kann zum Beispiel die Menge des Lichts für jede assoziierte Beleuchtungsrichtung beschreiben, die an unterschiedlichen Punkten des Raums vorhanden ist. Das Leuchtfeld kann z.B. mit einer Ausbreitungsrichtung des Lichts assoziiert sein. Das Leuchtfeld kann zum Beispiel eine bestimmte definierte Breite zwischen zwei Rändern aufweisen; beispielsweise kann die Breite des Leuchtfelds senkrecht zur Ausbreitungsrichtung definiert sein. Das Leuchtfeld kann z.B. den Strahlengang definieren. Der Strahlengang kann z.B. eine Zentralachse aufweisen, die symmetrisch in Bezug auf die Ränder des Leuchtfelds definiert ist.

Durch das Aufweiten des Leuchtfelds kann dessen Breite vergrößert werden. Dies bedeutet, dass die Ausdehnung des Leuchtfelds bewirkt, dass Licht in einem größeren Raumwinkel vorhanden ist. Dadurch kann zum Beispiel erreicht werden, dass das Objekt aus einem ausgedehnten Raumwinkel beleuchtet wird, welcher beispielsweise um die jeweilige Beleuchtungsrichtung zentriert ist. Durch das Aufweiten kann das Leuchtfeld der verschiedenen Beleuchtungsrichtungen deshalb im Bereich des Probenhalters bzw. des Objekts eine vergleichsweise große Ausdehnung senkrecht zur Ausbreitungsrichtung des Lichts aufweisen.

Durch solche Techniken kann erreicht werden, dass Artefakte in einem Ergebnisbild aufgrund von Verunreinigungen im Strahlengang reduziert werden bzw. entfernt werden (Artefaktreduktion). Insbesondere können Artefakte im Ergebnisbild aufgrund von Verunreinigungen, die sich außerhalb einer Fokusebene der optischen Vorrichtung im Bereich des Probenhalters befinden, reduziert werden. Insbesondere kann es möglich sein, Artefakte aufgrund von Verunreinigungen, die sich außerhalb der Fokusebene befinden, zu reduzieren, während gleichzeitig die Qualität der Bildgebung in Bezug auf das Objekt - welches im Bereich der Fokusebene der optischen Vorrichtung angeordnet ist - nicht oder nicht signifikant herabgesetzt wird. Dabei kann die Qualität der Bildgebung zum Beispiel charakterisiert sein durch eine Kantenschärfe des Objekts, ein Signal-zu-Rausch Verhältnis, ein Bildrauschen, etc.

Es können unterschiedliche Filter verwendet werden, um die Aufweitung des Leuchtfelds für die verschiedenen Beleuchtungsrichtungen zu erreichen. Zum Beispiel könnte der Filter eine Streuscheibe umfassen oder als Streuscheibe implementiert sein. Derart kann ein besonders robuster und einfach herzustellender Filter verwendet werden.

Zum Beispiel könnte die Streuscheibe durch eine Kunststoff-Scheibe implementiert sein. Beispielsweise wäre es möglich, dass eine oder mehrere Oberflächen der Streuscheibe eine aufgeraute Struktur aufweisen, d.h. eine Oberfläche mit einer signifikanten Topologie vorhanden ist. Dabei kann eine Längenskala der Topologie der Oberfläche korrelieren mit einer Längenskala der Aufweitung des Leuchtfelds. Der Filter kann die Aufweitung des Leuchtfelds für beide Transmissionsrichtungen bewirken oder aber lediglich für Licht, welches von dem Beleuchtungsmodul auf den Filter einfällt.

Es kann erstrebenswert sein, dass der Filter einen vergleichsweise hohen Transmissionsgrad für das entlang der jeweiligen Beleuchtungsrichtung einfallende Licht aufweist. Zum Beispiel kann der Transmissionsgrad >50 % sein, bevorzugt >85 %, besonders bevorzugt >95 %. Dadurch kann erreicht werden, dass aufgrund des Vorsehen des Filters keine oder keine signifikante Herabsetzung der Qualität der Bildgebung erfolgt.

Zum Beispiel wäre es möglich, dass eine Oberfläche der Streuscheibe einen signifikanten Winkel mit einer Zentralachse der Strahlengänge einschließt, die mit den verschiedenen Beleuchtungsrichtungen assoziiert sind. Zum Beispiel wäre es möglich, dass dieser Winkel mehr als 50° beträgt, bevorzugt mehr als 70° beträgt, besonders bevorzugt mehr als 85° beträgt. Durch eine solche senkrechte Anordnung kann die Reflektion auf der Oberfläche des Filters reduziert werden und der Transmissionsgrad erhöht werden.

Zum Beispiel wäre es möglich, dass die Streuscheibe nahe bei dem Beleuchtungsmodul positioniert ist. Zum Beispiel könnte ein Abstand zwischen einer Oberfläche der Streuscheibe und dem Beleuchtungsmodul geringer sein als eine Ausdehnung der Oberfläche der Streuscheibe. Zum Beispiel könnte ein Abstand zwischen einer Oberfläche der Streuscheibe und dem Beleuchtungsmodul geringer sein als die Breite des Leuchtfelds für verschiedene Beleuchtungsrichtungen vor oder optional hinter dem Filter.

In einem Beispiel wäre es möglich, dass das Beleuchtungsmodul einen Träger umfasst, auf dem die Lichtquellen angebracht sind. Dann wäre es möglich, dass der Filter mit dem Träger starr gekoppelt ist. In einem solchen Beispiel kann es möglich sein, den Filter in besonders engem örtlichen Bezug zu dem Beleuchtungsmodul zu positionieren. Dadurch lässt sich eine besonders effiziente Aufweitung des Leuchtfelds der verschiedenen Beleuchtungsrichtungen erzielen. Darüber hinaus kann der Filtre Bauraum-effizient angeordnet werden.

Die optische Vorrichtung kann weiterhin den Detektor umfassen, z.B. einen CMOS-Detektor oder einen CCD-Detektor oder einen Photomultiplier. Der Detektor kann ein Array von Bildpunkten aufweisen. Der Detektor kann in dem Strahlengang der optischen Vorrichtung angeordnet sein. Die optische Vorrichtung kann auch eine Recheneinheit umfassen. Die Recheneinheit kann eingerichtet sein, um das Beleuchtungsmodul zum Beleuchten des Objekts aus mehreren Mess-Beleuchtungsrichtungen anzusteuern. Die Recheneinheit kann weiterhin eingerichtet sein, um den Detektor zum Erfassen von Messbildern des Objekts anzusteuern. Die Messbildern sind dabei den Mess-Beleuchtungsrichtungen zugeordnet. Die Recheneinheit kann weiterhin eingerichtet sein, um die Messbilder zum Erhalten eines Ergebnisbilds zu kombinieren.

Es sind in den verschiedenen hierin beschriebenen Beispielen unterschiedliche Zuordnungen zwischen den Mess-Beleuchtungsrichtungen und den Messbildern möglich. Z.B. wäre eine 1:1-Zuordnung möglich. Z.B. könnte die Recheneinheit eingerichtet ein, um den Detektor für jede der Mess-Beleuchtungsrichtungen zum Erfassen eines jeweiligen Messbilds des Objekts anzusteuern. Es wäre aber auch eine andere Zuordnung möglich: z.B. könnte die Recheneinheit eingerichtet sind, um den Detektor so anzusteuern, dass ein Messbild mehr als einer Mess-Beleuchtungsrichtung zugeordnet ist. Bei einer 1:n-Zuordnung mit n>2 kann die Geschwindigkeit der Bildgebung erhöht werden: Das kann insbesondere bei der Hellfeld-Bildgebung erstrebenswert sein.

Beispielsweise wäre es möglich, dass das Ergebnisbild einen Phasenkontrast aufweist. Es wäre aber auch möglich, dass das Ergebnisbild keinen oder keinen signifikanten Phasenkontrast aufweist. Dabei kann z.B. klassische Hellfeld-Bildgebung betrieben werden.

Bei der Hellfeld-Bildgebung wäre es z.B. möglich, dass die Reicheneinheit eingerichtet ist, um das Beleuchtungsmodul zum zeitparallelen Beleuchten des Objekts aus mehreren Mess-Beleuchtungsrichtungen anzusteuern. Die Recheneinheit kann dann weiterhin eingerichtet sein, um den Detektor zum Erfassen eines Ergebnisbild anzusteuern. Das Ergebnisbild kann einen Hellfeld-Kontrast aufweisen, da gleichzeitig aus unterschiedlichen Beleuchtungsrichtungen eine Beleuchtung erfolgt. Dabei kann es z.B. erstrebenswert sein, das Objekt möglichst gleichmäßig aus den unterschiedlichen Raumrichtungen zu beleuchten. Dies kann bedingen, dass eine große Anzahl oder alle verfügbaren Lichtquellen zeitparallel aktiviert werden.

Die verschiedenen Mess-Beleuchtungsrichtungen können der selektiven Aktivierung unterschiedlicher Lichtquellen des Beleuchtungsmoduls entsprechen. Z.B. kann das Objekt sequentiell aus den verschiedenen Mess-Beleuchtungsrichtungen beleuchtet werden. Es wäre alternativ oder zusätzlich möglich, dass die verschiedenen Mess-Beleuchtungsrichtungen unterschiedlichen Farben und/oder Polarisationen zugeordnet sind, sodass derart eine Trennung zwischen den verschiedenen Beleuchtungsrichtungen für die Messbilder erfolgen kann. Beim sequentiellen Beleuchten können pro Sequenz-Schritt jeweils ein oder mehrere Beleuchtungsrichtungen durch Betreiben von ein oder mehreren Lichtquellen implementiert werden, d.h. eine 1:n-Zuordnung mit n >= 1 implementiert werden. Dabei kann n für verschiedene Messbilder variieren oder gleich sein.

Dabei kann es zum Beispiel möglich sein, dass möglichst unterschiedliche Beleuchtungsrichtungen für die verschiedenen Messbilder verwendet werden, d.h. Beleuchtungsrichtungen, die miteinander einen großen Winkel einschließen. Dadurch kann erreicht werden, dass das Ergebnisbildern besonders starken Phasenkontrast in Bezug auf das Objekt aufweist. Dabei können zum Beispiel Techniken angewendet werden, wie sie grundsätzlich aus DE 10 2014 112 242 A1 bekannt sind; der entsprechende Offenbarungsgehalt wird hierin durch Querverweis aufgenommen.

Gemäß solchen voranstehend beschriebenen Beispielen, die auf der Verwendung eines Filters beruhen, der für jede Beleuchtungsrichtung das entsprechende Leuchtfeld aufweitet, kann eine besonders schnelle, Hardware-implementierte Reduktion von mit Verunreinigungen assoziierten Artefakten erfolgen. Insbesondere kann es in Bezug auf die Artefaktreduktion entbehrlich sein, eine zusätzliche digitale Nachbearbeitung der Messbilder und/oder des Ergebnisbilds durchzuführen. Durch die Hardware-Implementierung der Artefaktreduktion kann vermieden werden, dass in die digitale Nachbearbeitung eine zusätzliche Latenz aufgrund von weiteren Verarbeitungsschritten eingeführt wird. Dadurch kann es möglich sein, dass Ergebnisbilder besonders zügig bereitzustellen; insbesondere kann es möglich sein, Echtzeitanwendungen der Phasenkontrast-Bildgebung zu implementieren.

Solche obenstehend beschriebenen Beispiele betreffend die Verwendung eines Filters zur Hardware-basierten Artefaktreduktion können ersetzt werden durch oder kombiniert werden mit Techniken der digitalen Artefaktreduktion. Bei der digitalen Artefaktreduktion kann es möglich sein, im Rahmen der digitalen Nachbearbeitung Artefakte aufgrund von Verunreinigungen, die im Strahlengang der optischen Vorrichtung die fokussiert angeordnet sind, zu reduzieren. Die verschiedenen Beispiele betreffend die digitale Artefaktreduktion und die Hardware-implementierte Artefaktreduktion können miteinander kombiniert werden.

Erfindungsgemäß umfasst das Verfahren das Ansteuern eines Beleuchtungsmoduls einer optischen Vorrichtung zum - beispielsweise sequentiellen - Beleuchten eines Objekts aus mehreren Mess-Beleuchtungsrichtungen. Das Beleuchtungsmodul weist mehrere Lichtquellen auf. Das Verfahren umfasst weiterhin: Ansteuern eines Detektors der optischen Vorrichtung zum Erfassen von Messbildern des Objekts, wobei die Messbilder den Mess-Beleuchtungsrichtungen zugeordnet sind. Das Verfahren umfasst weiterhin, für jedes Messbild: Durchführen einer Artefaktreduktion, welche ein Artefakt im jeweiligen Messbild aufgrund einer defokussiert angeordneten Verunreinigungen reduziert. Das Verfahren umfasst weiterhin nach dem Durchführen der Artefaktreduktion für jedes Messbild: Kombinieren der Messbilder zum erhalten eines Ergebnisbilds. Beispielsweise wäre es möglich, dass das Ergebnisbild einen Phasenkontrast aufweist. Es wäre aber auch möglich, dass das Ergebnisbild keinen oder keinen signifikanten Phasenkontrast aufweist. Dabei kann z.B. klassische Hellfeld-Bildgebung betrieben werden.

Z.B. könnte für jede Mess-Beleuchtungsrichtung ein zugeordnetes Messbild erfasst werden. Es wäre auch möglich, dass für zumindest einige Messbilder mehr als eine Mess-Beleuchtungsrichtung aktiviert ist. Es kann also eine 1:n-Zuordnung mit n >= 1 implementiert werden. Dabei kann n für verschiedene Messbilder variieren oder gleich sein.

Alternativ oder zusätzlich zu einer sequentiellen Beleuchtung des Objekts aus den mehreren Mess-Beleuchtungsrichtungen wäre es auch möglich, eine Trennung der Beleuchtungsrichtungen für die Messbilder über die Farbe (bzw. Spektralbereich) und/oder die Polarisation des Lichts, das mit den verschiedenen Mess-Beleuchtungsrichtungen assoziiert ist, zu erreichen.

In Bezug auf das Kombinieren der Messbilder zum Erhalten des Ergebnisbilds können wiederum Techniken angewendet werden, wie sie grundsätzlich aus DE 10 2014 112 242 A1 bekannt sind. Dadurch kann ein Phasenkontrast für das Ergebnisbild erzeugt werden. Zum Beispiel können eine Anzahl von zwei, vier, acht oder mehr Messbilder erfasst werden und miteinander zum Erhalten des Ergebnisbilds kombiniert werden. Dabei können z.B. gewichtete Summen verwendet werden. Dabei können entsprechende Wichtungsfaktoren positive und/oder negative Werte annehmen.

Durch das Durchführen der Artefaktreduktion in Bezug auf jedes Messbild kann erreicht werden, dass das Ergebnisbild keine oder keine signifikanten Artefakte aufgrund von Verunreinigungen aufweist. Insbesondere kann durch die frühzeitige Artefaktreduktion in Bezug auf jedes Messbild verhindert werden, dass aufgrund der Kombination der verschiedenen Messbilder zum Erhalten des Ergebnisbilds die Artefakte von den verschiedenen Messbildern auf das Ergebnisbild übertragen werden.

Dabei können unterschiedliche Techniken zum Durchführen der Artefaktreduktion eingesetzt werden. In einem Beispiel, das nicht zur Erfindung gehört, ware es möglich, dass die Artefaktreduktion allein basierend auf Information, die aus den verschiedenen Messbildern erhalten wird, durchgeführt wird; dies kann bedeuten, dass es nicht erforderlich ist, zusätzliche Referenzbilder des Objekts zu erfassen, um die Artefaktreduktion durchzuführen. Z.B. könnte ein Weichzeichnungsfilter in Bereichen außerhalb des Objekts angewendet werden, um die Artefakte zu reduzieren. Dies kann den Vorteil einer reduzierten Exposition des Objekts gegenüber Licht aufweisen, was zum Beispiel in Bezug auf biologische Proben vorteilhaft sein kann. Außerdem kann dadurch eine Zeitdauer, die zum Durchführen der Messung bis zum erhalten des Ergebnisbilds benötigt wird (Messdauer) reduziert werden.

Erfindungsgemäß wird zusätzliche Information - über die Messbilder hinaus - zum Durchführen der Artefaktreduktion berücksichtigt. Das Verfahren umfasst für jedes Messbild: Ansteuern des Beleuchtungsmoduls zum - beispielsweise sequentiellen - Beleuchten des Objekts aus mindestens einer zugeordneten Referenz-Beleuchtungsrichtung. Das Verfahren umfasst dann für jede Referenz-Beleuchtungsrichtung weiterhin: Ansteuern des Detektors zum Erfassen eines Referenzbilds des Objekts. Das Verfahren umfasst dann beim Durchführen der Artefaktreduktion weiterhin: Kombinieren des jeweiligen Messbilds mit dem mindestens einen zugeordneten Referenzbild zum Erhalten mindestens eines Korrekturbilds, das indikativ für das Artefakt ist.

In anderen Worten ist es also möglich, dass für jedes Messbild jeweils ein oder mehrere zugeordnete Referenzbilder bei entsprechenden Referenz-Beleuchtungsrichtungen erfasst werden. Auf Grundlage dieser Referenzbilder ist es möglich, für jedes Messbild ein oder mehrere Korrekturbilder zu erhalten, die das Artefakt im jeweiligen Messbild indizieren; auf Grundlage der Korrekturbilder ist es dann möglich, das Artefakt in dem jeweiligen Messbild zu identifizieren und basierend darauf das jeweilige Messbild zu korrigieren, um das Artefakt zu entfernen bzw. einen Einfluss des Artefakts auf das Messbild zu reduzieren.

Solche Techniken können insbesondere ausnutzen, dass durch die defokussierte Anordnung der Verunreinigung eine charakteristische Positionsänderung des Artefakts in den verschiedenen Referenzbildern erzielt werden kann - insbesondere im Vergleich zu der Positionsänderung des Objekts in den verschiedenen Referenzbildern. Durch geeignete Wahl der Referenz-Beleuchtungsrichtungen kann möglich sein, diese Positionsänderung des Artefakts besonders charakteristisch auszugestalten, was eine besonders genaue Identifikation des Artefakts in dem Messbild ermöglichen kann.

Zum Beispiel kann erreicht werden, dass das Artefakt zwischen dem mindestens einen Referenzbild und dem zugehörigen Messbild eine größere Positionsänderung aufweist, als das Objekt selbst. Insbesondere kann es durch geeignete Wahl der Referenz-Beleuchtungsrichtungen möglich sein, dass das Objekt zwischen dem mindestens einen Referenzbild und dem zugehörigen Messbild keine oder keine signifikante Positionsänderung aufweist; während das Artefakt zwischen dem mindestens einen Referenzbild und dem zugehörigen Messbild eine signifikante Positionsänderung aufweist.

Aufgrund der charakteristischen Positionsänderung kann durch das Kombinieren des jeweiligen Messbilds mit dem mindestens einen zugeordneten Referenzbild das Korrekturbild derart erhalten werden, dass das Korrekturbild indikativ für das Artefakt ist. Insbesondere kann es möglich sein, dass in den verschiedenen Korrekturbildern die Artefakte eine größere Intensität aufweisen, als die jeweiligen Objekte. Deshalb kann basierend auf einem Intensitätsschwellenwert eine Trennung der Artefakte von anderen Bildbestandteilen, wie beispielsweise dem Objekt oder dem Hintergrund, erfolgen.

Durch Verwendung der Referenzbilder kann zusätzliche Information über das Artefakt gewonnen werden. Insbesondere kann es möglich sein, das Artefakt gegenüber sonstigen Bestandteilen des Messbilds - beispielsweise dem Objekt und dem Hintergrund - zu isolieren. Dadurch kann die Artefaktreduktion besonders genau durchgeführt werden, ohne dass sonstige Bildbestandteile negativ beeinflusst werden würden.

Zum Beispiel ware es möglich, dass das Verfahren weiterhin, beim Durchführen der Artefaktreduktion, für jedes Korrekturbild umfasst: Anwenden einer Bildsegmentierung basierend auf einem Intensitätsschwellenwert zum Erhalten einer isolierten Artefaktregion in dem Korrekturbild. Die Artefaktregion kann das Artefakt beinhalten. Dann kann es beim Durchführen der Artefaktreduktion für jedes Messbild möglich sein, das Artefakt basierend auf der Artefaktregion des jeweiligen Korrekturbilds zu entfernen.

Mittels der Bildsegmentierung ist es möglich, das jeweilige Korrekturbild in zwei oder mehr zusammenhängende Regionen zu zerlegen. Dabei können die verschiedenen zusammenhängenden Regionen in Bezug auf den Intensitätsschwellenwert definiert sein. Der Intensitätsschwellenwert kann - etwa im Vergleich zu einem Mittelpunkt der Intensitätswerte verschiedener Bildpunkte des jeweiligen Korrekturbilds - positive und/oder negative Amplituden berücksichtigen. In Bezug auf den Intensitätsschwellenwert können auch Toleranzen berücksichtigt werden, zum Beispiel um Übergänge zwischen den verschiedenen zusammenhängenden Regionen gemäß bestimmter Randbedingungen zu gewährleisten. Durch die Bildsegmentierung kann die Artefaktregion erhalten werden, welche es ermöglicht, das Artefakt in dem Korrekturbild zu markieren. Durch eine solche Markierung kann es dann besonders einfach möglich sein, das Artefakt in dem Messbild zu reduzieren.

In verschiedenen Beispielen ist es möglich, dass pro Messbild jeweils ein einziges Referenzbild erfasst wird. Dann kann es möglich sein, eine besonders schnelle Artefaktreduktion durchzuführen ohne die Messdauer signifikant zu verlängern. Echtzeitanwendungen sind zum Beispiel möglich. Gleichzeitig kann es aber möglich sein, dass die Genauigkeit der Artefaktreduktion durch die begrenzte Anzahl der Referenzbilder begrenzt ist. Deshalb kann es in anderen Beispielen möglich sein, dass pro Messbild mehr als ein einziges Referenzbild erfasst wird, zum Beispiel eine Anzahl von zwei, drei oder vier Referenzbildern.

In einem Beispiel kann die Verunreinigungen Streuer und Absorber umfassen. Typischerweise weisen sowohl Streuer, als auch Absorber in den erfassten Bildern eine hohe Intensität auf; wobei jedoch ein Vorzeichen der Amplitude für Streuer und Absorber verschieden ist, z.B. in Bezug auf einen Mittelwert der Amplituden der verschiedenen Bildpunkte und/oder in Bezug auf einen Wert der Amplituden von Bildpunkten, die den Hintergrund abbilden. Dies bedeutet, dass es zum Beispiel möglich ist, dass Streuer in dem Bild mit hellem Kontrast aufscheinen; während Absorber in dem Bild mit dunklem Kontrast aufscheinen. Insbesondere in einem solchen Beispiel kann es möglich sein, dass mehr als ein einziges Referenzbild pro Messbild erfasst wird, um eine möglichst genaue Artefaktreduktion sowohl für die Artefakte aufgrund von Streuern, als auch für die Artefakte aufgrund von Absorbern durchzuführen.

Zum Beispiel wäre es dann möglich, dass für jedes Korrekturbild eine Korrektur der jeweiligen Artefaktregion basierend auf der Artefaktregion eines weiteren Korrekturbilds durchgeführt wird. Dabei kann die Korrektur der Artefaktregion für solche Paare von Korrekturbildern durchgeführt werden, die mit demselben Messbild assoziiert sind.

Zum Beispiel könnte die Korrektur der verschiedenen Artefaktregionen zum Trennen von Artefaktregionen, die entweder Streuern oder Absorbern zugeordnet sind, dienen. Dadurch kann es möglich sein, dass Messbild besonders genau zu korrigieren; insbesondere kann eine Vermischung von Artefakten aufgrund von Streuern oder Absorbern vermieden werden.

Voranstehend wurden Techniken beschrieben, bei welchen aufgrund einer Kombination des jeweiligen Messbilds mit dem mindestens einen zugeordneten Referenzbild ein Korrekturbild erhalten wird, dass indikativ für das Artefakt ist. Es sind, zusätzlich oder alternativ zu solchen Techniken, auch andere Implementierungen der Artefaktreduktion möglich.

In einem Beispiel umfasst das Verfahren für jedes Messbild: Ansteuern des Beleuchtungsmoduls zum beispielsweise sequentiellen Beleuchten des Objekts aus einer zugeordneten Sequenz von Referenz-Beleuchtungsrichtungen. Für jede Referenz-Beleuchtungsrichtung umfasst das Verfahren weiterhin: Ansteuern des Detektors zum Erfassen eines Referenzbilds des Objekts. Beim Durchführen der Artefaktreduktion umfasst das Verfahren weiterhin für jedes Messbild: Identifizieren einer Bewegung des Artefakts als Funktion der jeweiligen Sequenz der Referenz-Beleuchtungsrichtungen in den zugeordneten Referenzbildern. Die jeweilige Artefaktreduktion basiert auf der jeweils identifizierten Bewegung des Artefakts.

Die Sequenz von Referenz-Beleuchtungsrichtungen kann auch zumindest teilweise zeitparallel abgearbeitet werden, z.B. durch Überlagerung von Licht mit unterschiedlichen Farben und/oder unterschiedlicher Polarisation. Derart kann eine Trennung der verschiedenen Referenzbilder erfolgen.

Dabei kann die Bewegung des Artefakts als Funktion der jeweiligen Sequenz charakteristisch ausgestaltet sein. Insbesondere ist es möglich, dass die Bewegung des Artefakts eine Sequenz von inkrementellen Positionsänderungen für die Sequenz der Referenz-Beleuchtungsrichtungen umfasst, wobei die derart gebildete Bewegung des Artefakts verschieden ist von der entsprechenden Bewegung des Objekts als Funktion der jeweiligen Sequenz. Insbesondere kann es möglich sein, dass durch geeignete Wahl der Referenz-Beleuchtungsrichtungen eine besonders geringe oder keine Bewegung des Objekts als Funktion der Sequenz erhalten wird. Die Bewegung des Artefakts kann durch geeignete Wahl der Sequenz angepasst werden.

Beispielsweise wäre es möglich, die Bewegung des Objekts und/oder die Bewegung des Artefakts als Funktion der jeweiligen Sequenz der Referenz-Beleuchtungsrichtungen basierend auf Techniken der Bildsegmentierung und/oder Kantenerkennung zu identifizieren. Beispielsweise wäre es alternativ oder zusätzlich möglich, die Bewegung des Objekts und/oder die Bewegung des Artefakts basierend auf Prior-Wissen zu identifizieren. Zum Beispiel kann das Prior-Wissen in Abhängigkeit der Referenz-Beleuchtungsrichtungen die erwartete Bewegung des Objekts und/oder des Artefakts beschreiben, beispielsweise qualitativ oder quantitativ. Beispielsweise wäre es möglich, die Bewegung des Objekts und/oder die Bewegung des Artefakts auf Grundlage einer Optimierung zu identifizieren. Zum Beispiel könnte - etwa in Kombinationen mit den oben genannten Techniken der Bildsegmentierung, Kantenerkennung und/oder Prior-Wissen - eine iterative Optimierung durchgeführt werden, die die Bewegung des Objekts und/oder die Bewegung des Artefakts bestimmt. Die Optimierung kann zum Beispiel mit einem Abbruchkriterium assoziiert sein, welches beispielsweise benötigte Zeitdauer, die Anzahl der Iterationen und/oder eine Genauigkeit der Übereinstimmung mit dem Prior-Wissen betrifft.

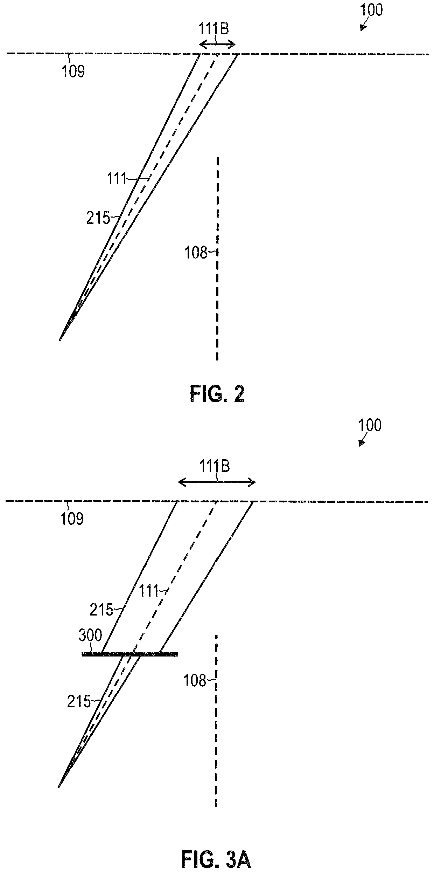

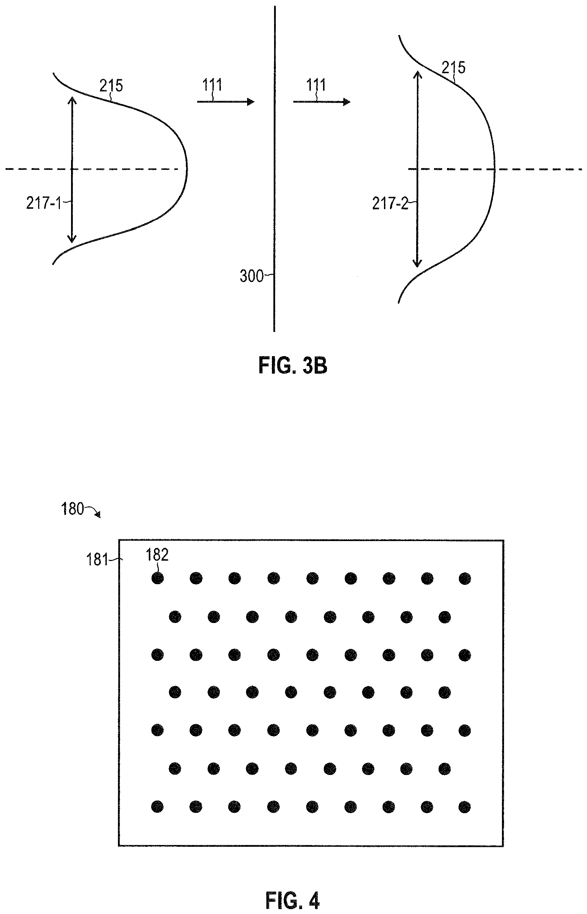

Z.B. sind aus XUE, T., RUBINSTEIN M., LIO C., FREEMAN W. T. "A computational approach for obstruction-free photography" in ACM Trans. Graph. Proc. ACM SIGGRAPH 2015, 34 (2015) 79 Techniken bekannt, um einen reflektierenden Vordergrund bzw. einen verdeckenden Vordergrund eines Bilds von einem Hintergrund des Bilds zu trennen. Dabei wird eine Bewegung der Kamera und eine daraus resultierende Bewegung des Vordergrunds im Vergleich zum Hintergrund ausgenutzt, um die Trennung durchzuführen. Beispielsweise kann eine Parallaxe der Bewegung zwischen Vordergrund und Hintergrund ausgenutzt werden, um die Trennung durchzuführen. Dabei werden Techniken der Kantenerkennung und der iterativen Optimierung durchgeführt, vergleiche ebd.: FIG. 3.

Die entsprechende Offenbarung dieses Artikels wird hierin durch Querverweis aufgenommen. Insbesondere ist es möglich, entsprechende Techniken auch für die vorliegende Trennung des Artefakts von dem Objekt durchzuführen. Dabei sollte verstanden werden, dass vorliegend keine Bewegung des Detektors verwendet wird, um die Bewegung des Artefakts zu induzieren; vielmehr wird die Sequenz der Referenz-Beleuchtungsrichtungen dazu verwendet, um die Bewegung des Artefakts zu induzieren. Dennoch wurde erkannt, dass entsprechende Techniken zur Identifikation der Bewegung und zum Durchführen der Artefaktreduktion verwendet werden können.

Es ist dann möglich, dass das Verfahren beim Durchführen der Artefaktreduktion für jedes Messbild weiterhin umfasst: Kombinieren des jeweiligen Messbilds mit zumindest einem der zugeordneten Referenzbildern basierend auf der identifizierten Bewegung des Artefakts. Durch das Kombinieren kann es zum Beispiel möglich sein, das Artefakt zu entfernen und durch das Artefakt in dem Messbild verdeckte Bildbereiche zu rekonstruieren. Dadurch kann die Artefaktreduktion mit einer hohen Genauigkeit durchgeführt werden.

Typischerweise weisen solche Techniken, die auf der Bewegung des Artefakts basieren, den Effekt einer besonders hohen Genauigkeit der Artefaktreduktion auf. Gleichzeitig kann jedoch die benötigte Rechenleistung vergleichsweise hoch sein; darüber hinaus kann es erforderlich sein, dass die Sequenz der Referenz-Beleuchtungsrichtungen eine recht große Anzahl von Referenz-Beleuchtungsrichtungen umfasst - z.B. mehr als fünf oder mehr als zehn Referenz-Beleuchtungsrichtungen -, so dass das Erfassen der entsprechenden Referenzbilder eine vergleichsweise lange Zeitdauer in Anspruch nehmen kann.

Durch geeignete Wahl der Referenz-Beleuchtungsrichtungen kann es möglich sein, die Positionsänderung des Artefakts zwischen dem Messbild und einem Referenzbild bzw. zwischen verschiedenen Referenzbildern geeignet auszugestalten. Insbesondere kann es durch geeignete Wahl der Referenz-Beleuchtungsrichtungen möglich sein, dass diese Positionsänderung des Artefakts charakteristisch gegenüber einer entsprechenden Positionsänderung des Objekts ausgebildet ist. Diese charakteristische Positionsänderung des Artefakts kann bei der Artefaktreduktion ausgenutzt werden. Nachfolgend werden Techniken beschrieben, die eine solche geeignete Wahl der Referenz-Beleuchtungsrichtungen erzielen.

Beispielsweise wäre es möglich, dass die mindestens eine Mess-Beleuchtungsrichtung, die einem ausgewählten Messbilds zugeordnet ist, mit den übrigen Mess-Beleuchtungsrichtungen einen ersten mittleren Winkel einschließt. Diese mindestens eine Mess-Beleuchtungsrichtung des ausgewählten Messbilds kann mit der zugeordneten mindestens einen Referenz-Beleuchtungsrichtung einen zweiten mittleren Winkel einschließen, der kleiner als der erste mittlere Winkel ist.

Also kann es möglich sein, dass die verschiedenen Mess-Beleuchtungsrichtungen einen vergleichsweise großen Winkel miteinander einschließen; während die verschiedenen Referenz-Beleuchtungsrichtungen, die zu einem bestimmten Messbild zugeordnet sind, einen vergleichsweise kleinen Winkel miteinander einschließen. Beispielsweise wäre es möglich, dass die verschiedenen Mess-Beleuchtungsrichtungen, die unterschiedlichen Messbildern zugeordnet sind, einen Winkel miteinander einschließen, der größer als 20° ist, bevorzugt >30° ist, besonders bevorzugt >40° ist. Beispielsweise wäre es möglich, dass die verschiedenen Referenz-Beleuchtungsrichtungen, die einem bestimmten Messbild zugeordnet sind, einen Winkel miteinander einschließen, der kleiner als 40° ist, bevorzugt <30° ist, besonders bevorzugt <20° ist. Zum Beispiel wäre es möglich, dass die verschiedenen Referenz-Beleuchtungsrichtungen, die einem bestimmten Messbild zugeordnet sind, einen Winkel miteinander einschließen, der kleiner als 15° ist, bevorzugt <10° ist, besonders bevorzugt <5° ist.

Durch das vergleichsweise kleine Dimensionieren des Winkels, den die mindestens eine Referenz-Beleuchtungsrichtung mit der mindestens einen Mess-Beleuchtungsrichtung einschließt, wird erreicht, dass das Objekt eine vergleichsweise geringe Positionsänderung zwischen dem Messbild und dem Referenzbild aufweist; dies ist der Fall, da das Objekt typischerweise in der Fokusebene (fokussiert) angeordnet ist. Gleichzeitig kann das defokussiert angeordnete Artefakt aber eine signifikante Positionsänderung aufweisen. Derart kann eine genaue Trennung von Artefakt und Objekt erfolgen und die Artefaktreduktion kann genau betrieben werden.

Zum Beispiel kann eine besonders kleine Dimensionierung des mittleren Winkels, den die verschiedenen Referenz-Beleuchtungsrichtungen, die einem bestimmten Messbild zugeordnet sind, miteinander einschließen, durch geeignete Ansteuerung des Beleuchtungsmoduls bzw. der verschiedenen Lichtquellen des Beleuchtungsmoduls erzielt werden. Zum Beispiel wäre es möglich, dass die mindestens eine Mess-Beleuchtungsrichtung, die dem ausgewählten Messbild zugeordnet ist, und die zugeordnete mindestens eine Referenz-Beleuchtungsrichtung zueinander nächstgelegenen Lichtquellen des Beleuchtungsmoduls entsprechen. Zum Beispiel wäre es also möglich, dass benachbarte Lichtquellen des Beleuchtungsmoduls zum Erzeugen des Messbilds und der zugeordneten Referenzbilder verwendet werden. Entsprechend kann es möglich sein, dass nicht-nächstgelegene Lichtquellen des Beleuchtungsmoduls zum Erzeugen der verschiedenen Messbilder verwendet werden; dies kann bedeuten, dass nicht-benachbarte Lichtquellen des Beleuchtungsmoduls - das heißt beispielsweise Lichtquellen des Beleuchtungsmoduls, zwischen denen weitere Lichtquellen angeordnet sind - für die verschiedenen Mess-Beleuchtungsrichtungen verwendet werden.

Dadurch kann eine vergleichsweise kleine Dimensionierung des mittleren Winkel, den die verschiedenen Referenz-Beleuchtungsrichtungen miteinander und mit der jeweiligen mindestens einen Mess-Beleuchtungsrichtung für ein bestimmtes Messbild einschließen erreicht werden. Durch das vergleichsweise kleine Dimensionieren dieses Winkels, kann erreicht werden, dass eine Positionsänderung des fokussiert angeordneten Objekts zwischen dem Messbild und dem mindestens einen Referenzbild bzw. zwischen verschiedenen Referenzbildern vergleichsweise gering ist. Gleichzeitig kann jedoch die Positionsänderung des Artefakts vergleichsweise groß sein, da das Artefakt aufgrund einer Verunreinigung entsteht, die nicht in der Fokusebene der optischen Vorrichtung angeordnet ist.

Im Allgemeinen kann es möglich sein, dass die Referenz-Beleuchtungsrichtungen zumindest teilweise verschieden von den Mess-Beleuchtungsrichtungen sind. Dies kann bedeuten, dass andere Lichtquellen des Beleuchtungsmoduls zum Erzeugen der Messbilder als zum Erzeugen der Referenzbilder angesteuert werden. Dadurch kann es möglich sein, dass der Informationsgehalt, auf welchem die Artefaktreduktion basiert, besonders groß ist.

In anderen Beispielen wäre es aber auch möglich, dass die Referenz-Beleuchtungsrichtungen und die Mess-Beleuchtungsrichtungen zumindest teilweise gleich gewählt werden. In einem solchen Fall kann es zum Beispiel möglich sein, dass für ein bestimmtes Messbild ein oder mehrere andere Messbilder als das mindestens eine Referenzbild, das dem bestimmten Messbild zugeordnet ist, verwendet werden. Derart kann es möglich sein, dass die Messdauer besonders gering dimensioniert werden kann, so das eine zügige Bildgebung möglich ist. Die Messdauer kann gering dimensioniert werden, da keine oder eine geringe Anzahl an dedizierten Referenzbildern erfasst werden muss.

In den verschiedenen hierin beschriebenen Beispielen kann es insbesondere erstrebenswert sein, dass das Objekt - im Gegensatz zur Verunreinigung - in einer Fokusebene der optischen Vorrichtung angeordnet ist, also fokussiert angeordnet ist. Derart kann nämlich erreicht werden, dass die Positionsänderung, die zwischen dem jeweiligen Messbild und dem mindestens einen Referenzbild für das Artefakt beobachtet wird, charakteristisch im Vergleich zu der entsprechenden Positionsänderung des Objekts ist. Durch das Anordnen des Objekts in der Fokusebene, kann z.B. erreicht werden, dass die Positionsänderung des Objekts vergleichsweise gering dimensioniert ist. Deshalb wäre es zum Beispiel möglich, dass das Verfahren weiterhin umfasst: Ansteuern des Probenhalters der optischen Vorrichtung zum Fokussieren des Objekts.

Grundsätzlich wäre es möglich, dass die Artefaktreduktion für jedes Messbild mehrfach iterativ durchgeführt wird. Zum Beispiel wäre es möglich, dass die Artefaktreduktion so lange durchgeführt wird, bis ein bestimmtes Konvergenzkriterium erfüllt ist. Zum Beispiel kann das Konvergenzkriterium definiert sein bezüglich: Anzahl der Iterationen; Signal-zu-Rauschverhältnis; und/oder Dauer zum Durchführen der Artefaktreduktion. Derart kann eine besonders genaue Artefaktreduktion gewährleistet werden; während gleichzeitig die Messdauer nicht unnötig verlängert wird.

Insbesondere ist es in den verschiedenen hierin beschriebenen Beispielen möglich, dass das Durchführen der Artefaktreduktion in Echtzeit geschieht. Derart kann es möglich sein, zum Beispiel im Zusammenhang mit einem optischen Mikroskop bestimmte Echtzeit-Prozesse, etwa das Verhalten von Zellkulturen, des Objekts artefaktreduziert abzubilden.

In einem Beispiel umfasst eine optische Vorrichtung einem Probenhalter, ein Beleuchtungsmodul, einen Detektor und eine Recheneinheit. Der Probenhalter ist eingerichtet, um ein Objekt im Strahlengang der optischen Vorrichtung zu fixieren. Das Beleuchtungsmodul umfasst mehrere Lichtquellen. Das Beleuchtungsmodul ist eingerichtet, um das Objekt aus mehreren Beleuchtungsrichtungen durch Betreiben der Lichtquellen zu beleuchten. Der Detektor ist im Strahlengang der optischen Vorrichtung angeordnet. Die Recheneinheit ist eingerichtet, um das Beleuchtungsmodul zum - beispielsweise zeitsequentiellen - Beleuchten eines Objekts aus mehreren Mess-Beleuchtungsrichtungen anzusteuern. Die Recheneinheit ist weiterhin eingerichtet, um den Detektor zum Erfassen von Messbildern des Objekts anzusteuern, wobei die Messbilder den Mess-Beleuchtungsrichtungen zugeordnet sind. Die Recheneinheit ist weiterhin für jedes Messbild eingerichtet, um eine Artefaktreduktion durchzuführen, welche ein Artefakt im jeweiligen Messbild aufgrund einer defokussiert angeordneten Verunreinigung reduziert. Die Recheneinheit eingerichtet, um nach dem Durchführen der Artefaktreduktion für alle Messbilder die Messbilder zum Erhalten eines Ergebnisbilds zu kombinieren. Das Ergebnisbild kann z.B. einen Phasenkontrast aufweisen.

Für eine solche optische Vorrichtung können Effekte erzielt werden, die vergleichbar sind mit den Effekten, die für ein Verfahren gemäß weiterer Beispiele erzielt werden können.

Beispielsweise kann die optische Vorrichtung eingerichtet sein, um das Verfahren gemäß weiterer Beispiele auszuführen.

In den verschiedenen hierin beschriebenen Beispielen können unterschiedliche Beleuchtungsmodule zur Implementierung der winkelselektiven Beleuchtung bzw. einer strukturierten Beleuchtungspupille eingesetzt werden. Zum Beispiel könnte das Beleuchtungsmodul einen Träger umfassen, auf dem die Lichtquellen in einer Matrix-Struktur angebracht sind. Dabei könnte die Matrix-Struktur zum Beispiel unterschiedliche Einheitszellen aufweisen; zum Beispiel könnte die Matrix-Struktur eine quadratische, rechteckige oder hexagonale Einheitszelle aufweisen. Die Anzahl der vorgesehenen Lichtquellen kann variieren. Zum Beispiel wäre es möglich, dass das Beleuchtungsmodul mehr als 10 Lichtquellen, bevorzugt mehr als 20 Lichtquellen, besonders bevorzugt mehr als 50 Lichtquellen aufweist. Dabei können unterschiedliche Lichtquellen verwendet werden. Es wäre zum Beispiel möglich, dass die Lichtquellen aus folgender Gruppe ausgewählt sind: Halogenlichtquellen; Leuchtdioden; Festkörper-Leuchtdioden; und organische Leuchtdioden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Beispielsweise wäre es möglich, die verschiedenen obenstehend beschriebenen Beispiele betreffend die Verwendung eines Filters zu kombinieren mit Techniken der Artefaktkorrektur durch digitale Nachbearbeitung.

KURZE BESCHREIBUNG DER FIGUREN

FIG. 1A illustriert schematisch das Beleuchten einer defokussiert angeordneten Verunreinigung aus verschiedenen Beleuchtungsrichtungen und eine assoziierte Positionsänderung in entsprechenden Messbildern gemäß verschiedener Ausführungsformen.

FIG. 1B illustriert schematisch ein basierend auf einer Kombination von mehreren Messbildern bestimmtes Ergebnisbild, welches Artefakte aufgrund der defokussiert angeordneten Verunreinigung aufweist.

FIG. 2 illustriert schematisch das Leuchtfeld einer Beleuchtungsrichtung ohne Filter.

FIG. 3A illustriert schematisch das Leuchtfeld der Beleuchtungsrichtung der FIG. 2 mit einem Filter gemäß verschiedener nicht zur Erfindung gehörender Beispiele, der eingerichtet ist, um das Leuchtfeld aufzuweiten.

FIG. 3B illustriert schematisch das Aufweiten des Leuchtfelds gemäß nicht zur Erfindung gehörender Beispiele, in größerem Detail.

FIG. 4 illustriert schematisch ein Beleuchtungsmodul mit mehreren Lichtquellen gemäß verschiedener Ausführungsformen, wobei die Lichtquellen als Festkörper-Leuchtdioden implementiert sind.

FIG. 5 illustriert schematisch ein Beleuchtungsmodul mit mehreren Lichtquellen gemäß verschiedener Ausführungsformen, wobei die Lichtquellen als organische Leuchtdioden implementiert sind.

FIG. 6 illustriert schematisch ein Beleuchtungsmodul mit mehreren Lichtquellen gemäß verschiedener Ausführungsformen, wobei die Lichtquellen als Halogenlichtquellen implementiert sind.

FIG. 7 illustriert schematisch das Leuchtfeld, das mit einer Beleuchtungsrichtung assoziiert ist und durch einen Filter aufgeweitet wird.

FIG. 8 illustriert schematisch eine optische Vorrichtung gemäß verschiedener Ausführungsformen.

FIG. 9 illustriert schematisch ein Beleuchtungsmodul mit mehreren Lichtquellen gemäß verschiedener Ausführungsformen und illustriert weiterhin verschiedene Mess-Beleuchtungsrichtungen und jeweils zugeordnete Referenz-Beleuchtungsrichtungen gemäß verschiedener Ausführungsformen.

FIG. 10 illustriert die Mess-Beleuchtungsrichtungen und die Referenz-Beleuchtungsrichtungen gemäß FIG. 9 in größerem Detail.

FIG. 11 illustriert schematisch das Durchführen einer Artefaktreduktion basierend auf Korrekturbildern, die indikativ für das Artefakt sind, gemäß verschiedener Ausführungsformen.

FIG. 12 illustriert schematisch das Durchführen einer Artefaktreduktion basierend auf Korrekturbildern, die indikativ für das Artefakt sind, gemäß verschiedener Ausführungsformen.

FIG. 13 illustriert schematisch ein Beleuchtungsmodul mit mehreren Lichtquellen gemäß verschiedener Ausführungsformen und illustriert weiterhin eine Sequenz von Referenz-Beleuchtungsrichtungen für eine Mess-Beleuchtungsrichtung gemäß verschiedener Ausführungsformen.

FIG. 14 illustriert schematisch die Bewegung des Artefakts als Funktion der Sequenz der Referenz-Beleuchtungsrichtungen der FIG. 13.

FIG. 15 ist ein Flussdiagramm eines nicht zur Erfindung gehörenden Verfahrens.

FIG. 16 ist ein Flussdiagramm eines Verfahrens gemäß verschiedener Ausführungsformen.

FIG. 17 illustriert Ergebnisbilder, die basierend auf einer Artefaktreduktion gemäß verschiedener Ausführungsformen bestimmt werden.

DETAILLIERTE BESCHREIBUNG VON AUSFÜHRUNGSFORMEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. Funktionale Einheiten können als Hardware, Software oder eine Kombination aus Hardware und Software implementiert werden.

Nachfolgend werden Techniken im Zusammenhang mit der winkelselektive in Beleuchtung eines Objekts beschrieben. Die winkelselektive Beleuchtung kann z.B. dazu verwendet werden, um mit einer strukturierten Beleuchtungspupille Hellfeld-Bildgebung zu betreiben. Die hierin beschriebenen Techniken können alternativ oder zusätzlich im Zusammenhang mit der Phasenkontrast-Bildgebung eingesetzt werden, wobei die Phasenkontrast-Bildgebung durch digitale Nachbearbeitung mehrerer Messbilder, die für verschiedene Mess-Beleuchtungsrichtungen erhalten werden, erfolgen kann. Oftmals werden solche Techniken auch als digitale Phasenkontrast-Bildgebung mit strukturierter Beleuchtungspupille bezeichnet.

Solche Techniken können zum Beispiel im Zusammenhang mit der Mikroskopie von Probenobjekten eingesetzt werden. Beispielsweise können solche Techniken im Zusammenhang mit der Echtzeit-Bildgebung von Probenobjekten eingesetzt werden. Dabei kann es zum Beispiel möglich sein, Fluoreszenz-Bildgebung zu betreiben. Die hierin beschriebenen Techniken der Phasenkontrast-Bildgebung können insbesondere im Zusammenhang mit biologischen Probenobjekten angewendet werden, die einen hohen Phasenkontrast aufweisen, jedoch nur einen begrenzten Amplitudenkontrast. Im Allgemeinen können die hierin beschriebenen Techniken z.B. für Phasenobjektive verwendet werden.

Den hierin beschriebenen Techniken liegt die Erkenntnis zugrunde, dass bei der Bildgebung mit strukturierter Beleuchtung oftmals eine Verstärkung von Artefakten erfolgen kann. Bei der winkelselektiven Beleuchtung werden typischerweise diskret angeordnete Lichtquellen verwendet - z.B. könnten die Lichtquellen in einer Matrix-Anordnung angeordnet sein. Durch die diskrete Verteilung der Lichtquellen entstehen Lücken in der Beleuchtungspupille. Diese Lücken können bei defokussierten Objekten in Artefakten im entstehenden Bild resultieren. Dieser Effekt kann sowohl bei der klassischen Hellfeld-Bildgebung auftreten, als auch bei der Phasenkontrast-Bildgebung.

Insbesondere bei der Phasenkontrast-Bildgebung kann eine solche Verstärkung von Artefakten kann aufgrund der Kombination der verschiedenen Messbilder zum Erhalten eines Ergebnisbilds im Rahmen der digitalen Phasenkontrast-Bildgebung stattfinden. Zum Beispiel wurde beobachtet, dass die in einem entsprechenden Ergebnisbild vorhandenen Artefakte ausgedehnte Muster beschreiben können, welche zum Beispiel mit der verwendeten strukturierten Beleuchtung korrelieren können. Das Muster kann ein Abbild der Beleuchtungsstruktur sein; zum Beispiel kann sich also bei einem gerasterten LED-Array ein gerastertes Artefakt für jedes defokussiert angeordnete Staubkorn ergeben. Aufgrund der ausgedehnten Muster können solche Artefakte die Verwertbarkeit des entsprechenden Ergebnisbilds reduzieren bzw. den Informationsgehalt des entsprechenden Ergebnisbilds herabsetzen. Dadurch kann der physikalisch-technische Informationsgehalt des Ergebnisbilds ohne eine Artefaktreduktion gemäß den hierin beschriebenen Techniken besonders begrenzt sein.

In den verschiedenen hierin beschriebenen Beispielen können Techniken der Artefaktreduktion auf Grundlage von Hardware-Merkmalen und/oder auf Grundlage von Software-Merkmalen implementiert werden. Zum Beispiel ist es möglich, dass die Artefaktreduktion basierend auf einem Filter implementiert wird, wobei der Filter eine Aufweitung des Leuchtfelds, dass einer bestimmten Beleuchtungsrichtung zugeordnet ist, vornimmt. Z.B. kann eine Kunststoff-Streuscheibe als Filter verwendet werden, die nahe bei dem Beleuchtungsmodul angeordnet ist. Dadurch kann optional die digitale Nachbearbeitung durch Kombination der Messbilder zu einem Ergebnisbild gemäß vorbekannter Techniken der digitalen Phasenkontrast-Bildgebung erfolgen. In weiteren Beispielen ist es möglich, dass die Artefaktreduktion basierend auf der digitalen Nachbearbeitung von Messbildern, die zu dem Ergebnisbild kombiniert werden, erfolgt. Die Artefaktreduktion kann für individuelle Messbilder erfolgen, um eine Verstärkung der Artefakte bei Kombination zu dem Ergebnisbild zu verhindern. Dabei kann beispielsweise ausgenutzt werden, dass für verschiedene mit einem bestimmten Messbild assoziierte Referenzbilder, die bei unterschiedlichen Referenz-Beleuchtungsrichtungen erfasst werden, eine Positionsänderung des Artefakts charakteristisch im Vergleich zu einer Positionsänderung des Objekts ist. Dadurch ist es zum Beispiel möglich, - etwa basierend auf Techniken der Bildsegmentierung - eine Artefaktregion zu bestimmen, welche das Artefakt umfasst. Dann kann es möglich sein, das Artefakt in dem jeweiligen Messbild zu isolieren bzw. zu entfernen. Es ist aber z.B. auch möglich, das Artefakt durch Berücksichtigung einer Bewegung der Artefakte gemäß einer Sequenz von Referenz-Beleuchtungsrichtungen zu markieren.

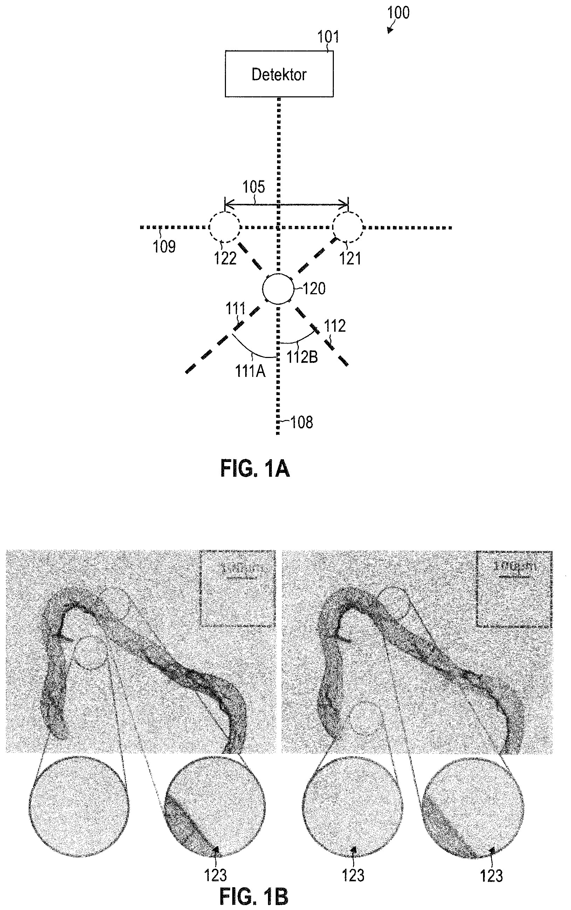

In FIG. 1A sind Aspekte in Bezug auf eine Positionsänderung 105 eines Artefakts 121, 122 in Abhängigkeit der Beleuchtungsrichtung 111, 112 beschrieben. Z.B. kann für jede Beleuchtungsrichtung ein zugehöriges Messbild erfasst werden oder es wird ein Messbild erfasst, welches zu beiden Beleuchtungsrichtungen 111, 112 zugeordnet ist.

Zum Beispiel wäre es möglich, dass bei Beleuchtung entlang einer Beleuchtungsrichtung 111 durch einen Detektor 101 einer entsprechenden optischen Vorrichtung 100 ein erstes Messbild erfasst wird, wobei in dem ersten Messbild ein Artefakt 121 an einer ersten Position aufscheint (in FIG. 1A rechts von der optischen Achse 108 dargestellt). Es wäre entsprechend möglich, dass bei Beleuchtung entlang der Beleuchtungsrichtung 112 durch den Detektor 101 ein zweites Messbild erfasst wird, wobei in dem zweiten Messbild ein Artefakt 122 an einer zweiten Position aufscheint. Die Artefakte 121, 122 sind durch dieselbe Verunreinigung 120 verursacht. Die Verunreinigung 120 ist gegenüber einer Fokusebene 109 eine abbildeten Optik der optischen Vorrichtung 100 (in FIG. 1A nicht dargestellt) beabstandet angeordnet, d.h. ist defokussiert angeordnet Aus FIG. 1A ist ersichtlich, dass aufgrund dieser defokussiert angeordneten Verunreinigung 120 die Positionsänderung 105 zwischen den Artefakten 121,122 in den beiden Messbildern resultiert.

Grundsätzlich können solche Artefakte 121,122 für Verunreinigungen 120 in Form von Streuern oder Absorbern beobachtet werden. Typischerweise erscheinen Artefakte 121,122 für Verunreinigungen 120 in Form von Streuern mit hellem Kontrast im entsprechenden Bild auf; während Artefakte 121,122 für Verunreinigungen 120 in Form von Absorbern mit dunklem Kontrast im entsprechenden Bild aufscheinen.

Die Positionsänderung 105 ist gegeben durch:

$$\Delta x = \Delta z \cdot \frac{\sin(\alpha + \beta)}{\cos \alpha \cos \beta} \quad , \tag{1}$$

wobei $\alpha$ den Winkel 111A der Beleuchtungsrichtung 111 mit der optischen Achse 108 bezeichnet, $\beta$ den Winkel 112A der Beleuchtungsrichtung 112 mit der optischen Achse 108 bezeichnet und $\Delta z$ den Abstand der Verunreinigung 120 von der Fokusebene 109 bezeichnet.

Gleichung 1 lässt sich wie folgt herleiten. Für das Szenario der FIG. 1A gilt:

$$\Delta z = a \cdot \cos\alpha = b \cdot \cos\beta \,, \tag{2}$$

wobei a einen Abstand zwischen der Verunreinigung 120 und dem Abbildungsort des Artefakts 121 entlang der Beleuchtungsrichtung 111 bezeichnet und b einen Abstand zwischen der Verunreinigung 120 und dem Abbildungsort des Artefakts 122 entlang der Beleuchtungsrichtung 112 bezeichnet (a und b sind in FIG. 1A nicht dargestellt).

Unter Anwendung des Sinussatzes für allgemeine Dreiecke erhält man:

$$\frac{\Delta x}{\sin(\alpha + \beta)} = \frac{b}{\sin(90° - \alpha)} = \frac{b}{\cos\alpha} \cdot \tag{3}$$

Aus einer Kombination der Gleichungen (2) und (3) wird Gleichung (1) erhalten. Entsprechende Techniken sind auch aus DE 10 2014 109 687 A1 bekannt, deren entsprechende Offenbarung hierin durch Querverweis aufgenommen wird.

Aus Gleichung 1 ist ersichtlich, dass eine größere Positionsänderung 105 für eine stärkere Defokussierung der Verunreinigung 120 erhalten wird, bzw. für größere Winkel 111A, 112A.

In FIG. 1B sind Aspekte in Bezug auf ein entsprechendes Artefakt 123 anhand von tatsächlichen Messdaten dargestellt. In dem Beispiel der FIG. 1B sind insbesondere zwei Ergebnisbilder dargestellt, die durch Kombination einzelner Messbilder, die für verschiedene Beleuchtungsrichtungen 111, 112 erfasst werden, erhalten werden. In dem Beispiel der FIG. 1B ist ersichtlich, dass sich das Artefakt 123 zu einem Muster ausweitet bzw. verstärkt; dieses Muster bildet die strukturierte Beleuchtung ab, da die Positionsänderungen 105 zwischen den individuellen Artefakten mit den verschiedenen verwendeten Beleuchtungsrichtungen 111, 112 korrelieren (cf. FIG. 1A). Die verschiedenen Beleuchtungsrichtungen 111, 112 wiederum korrelieren mit dem verwendeten Beleuchtungsmodul, welches mehrere Lichtquellen in Matrix-Struktur umfasst; diese Matrix-Struktur ist in den Artefakten 123 abgebildet.

Z.B. können entsprechende Artefakte auch im Zusammenhang mit der Hellfeld-Bildgebung auftreten. Bei der Hellfeld-Bildgebung werden typischerweise mehrere Lichtquellen eines entsprechenden Beleuchtungsmoduls pro Messbild aktiviert.

Nachfolgend werden Techniken beschrieben, um entsprechende Artefakte 121-123 zu reduzieren. In Bezug auf die FIGs. 2 und 3A ist eine Hardware-Implementierung einer entsprechenden Artefaktreduktion dargestellt. Dabei illustriert FIG. 2 Aspekte in Bezug auf ein Leuchtfeld 215 der Beleuchtungsrichtung 111 für eine Referenzimplementierung, bei der kein Filter zur Aufweitung des Leuchtfelds 215 verwendet wird.

Aus FIG. 2 ist ersichtlich, dass die Beleuchtungsrichtung 111 mit einem Leuchtfeld 215 assoziiert ist, welches eine gewisse Ausdehnung senkrecht zu dem entsprechenden Zentralachse aufweist (gestrichelten Linie in FIG. 2). In dem Beispiel der FIG. 2 ist das Leuchtfeld 215 der Beleuchtungsrichtung 111 vergleichsweise stark begrenzt bzw. weist eine geringe Breite auf. Dies bedeutet, dass das Objekt, welches in der Fokusebene 109 angeordnet ist (in FIG. 2 nicht gezeigt) unter einem Raumwinkel 111B beleuchtet wird, der vergleichsweise klein ist. Der Raumwinkel 111B ist um die Zentralachse der Beleuchtungsrichtung 111 zentriert. In verschiedenen Beispielen wäre es zum Beispiel möglich, dass die Größe des Raumwinkels 111B durch eine Ausdehnung der entsprechenden Lichtquelle des Beleuchtungsmoduls (in FIG. 2 nicht dargestellt), welche zur Beleuchtung unter der Beleuchtungsrichtung 111 verwendet wird, begrenzt ist. Zum Beispiel können laterale Dimensionen von Festkörper-Leuchtdioden vergleichsweise begrenzt sein, so das der Raumwinkel 111B auch eine vergleichsweise geringe Ausdehnung aufweist.

FIG. 3A entspricht grundsätzlich FIG. 2, wobei in dem Beispiel der FIG. 3A ein Filter 300 verwendet wird, um das Leuchtfeld 215 der Beleuchtungsrichtung 111 aufzuweiten. Aus dem Beispiel der FIG. 3A ist ersichtlich, dass die Ausdehnung des Leuchtfelds 215 senkrecht zu dem Strahlengang der Beleuchtungsrichtung 111 bei Durchtritt durch den Filter 300 aufgeweitet wird. Dadurch wird das Objekt, welches in der Fokusebene 109 angeordnet ist (in FIG. 3A nicht dargestellt), aus einem vergleichsweise großen Raumwinkel 111B beleuchtet.

FIG. 3B illustriert Aspekte in Bezug auf das Aufweiten des Leuchtfelds 215 der Beleuchtungsrichtung 111 durch den Filter 300. FIG. 3B illustriert die Amplitude des Leuchtfelds als Funktion der lateralen Position senkrecht zur Zentralachse (gestrichelte Linie in FIG. 3B) der Beleuchtungsrichtung. Außerdem ist die Ausbreitungsrichtung des Lichts durch den Pfeil indiziert. Insbesondere ist in FIG. 3B dargestellt, wie die Breite 217-1 des Leuchtfelds 215 vor dem Filter 300 aufgeweitet werden kann, um die Breite 217-2 des Leuchtfelds 215 hinter dem Filter 300 (in FIG. 3B rechtzeitig dargestellt) zu erhalten. Zum Beispiel kann die Breite 217-1, 217-2 des Leuchtfelds 215 in Bezug auf einen gewissen Abfall der Amplitude des Leuchtfelds gegenüber einem Maximum der Amplitude des Leuchtfelds 215 definiert sein. Insgesamt kann die maximale Amplitude des Leuchtfelds hinter dem Filter 300 abnehmen.

Für die verschiedenen Techniken der digitalen Phasenkontrast-Bildgebung kann ein vergleichsweise großer verwendete Raumwinkel 111B zur Beleuchtung des Objekts keine oder keine signifikante Einschränkung in Bezug auf die Qualität der derart erhaltenen Ergebnisbilder bewirken. Insbesondere kann es möglich sein, aufgrund der Verwendung von stark unterschiedlichen Mess-Beleuchtungsrichtungen einen ausgeprägten Phasenkontrast des Ergebnisbilds durch die vergleichsweise große Dimensionierung des entsprechenden Winkels zwischen den unterschiedlichen Mess-Beleuchtungsrichtungen zu erzielen. Gleichzeitig kann aber die Verwendung des vergleichsweise großen Raumwinkels 111B dazu führen, dass die individuellen Artefakte 121,122 in den verschiedenen Messbildern im Vergleich zu einem kleineren Raumwinkel 111B reduziert werden. Dies kann durch die defokussierte Anordnung der entsprechenden Verunreinigung bedingt sein: eine vergleichsweise große Breite 217-1,217-2 des Leuchtfelds 215 der entsprechenden Beleuchtungsrichtung 111, 112 bewirkt ein Ausschmieren des Kontrasts für die individuellen Artefakte 121,122 in den zugehörigen Messbildern.

FIG. 4 illustriert Aspekte in Bezug auf ein Beleuchtungsmodul 180, welches für die winkelselektive Beleuchtung aus unterschiedlichen Beleuchtungsrichtungen verwendet werden kann. Das Beleuchtungsmodul 180 umfasst einen Träger 181, zum Beispiel aus Metall oder Kunststoff. Auf dem Träger sind mehrere Lichtquellen 182 angeordnet. In dem Beispiel der FIG. 4 sind die verschiedenen Lichtquellen 182 in einer Matrix-Struktur mit einer hexagonalen Einheitszelle auf dem Träger 181 angeordnet. Es sind auch andere Matrix-Strukturen möglich, zum Beispiel mit einer quadratischen Einheitszelle. Zum Beispiel wäre es möglich, dass das Beleuchtungsmodul 180 zentral im Bereich der optischen Achse der optischen Vorrichtung 100 angeordnet ist.

Durch Betreiben der verschiedenen Lichtquellen 182 ist es möglich, die Beleuchtung des Objekts aus unterschiedlichen Beleuchtungsrichtungen zu implementieren. Je größer ein Abstand zwischen den verschiedenen Lichtquellen 182, desto größer typischerweise ein Winkel, den die verschiedenen Beleuchtungsrichtungen miteinander einschließen. Dabei können pro Messbild eine oder mehrere Lichtquellen 182 aktiviert sein.

Es können unterschiedlichste Typen von Lichtquellen 182 verwendet werden. In dem Beispiel der FIG. 4 werden etwa Festkörper-Leuchtdioden als Lichtquellen 182 verwendet. Die Festkörper-Leuchtdioden weisen eine vergleichsweise begrenzte laterale Ausdehnung auf.

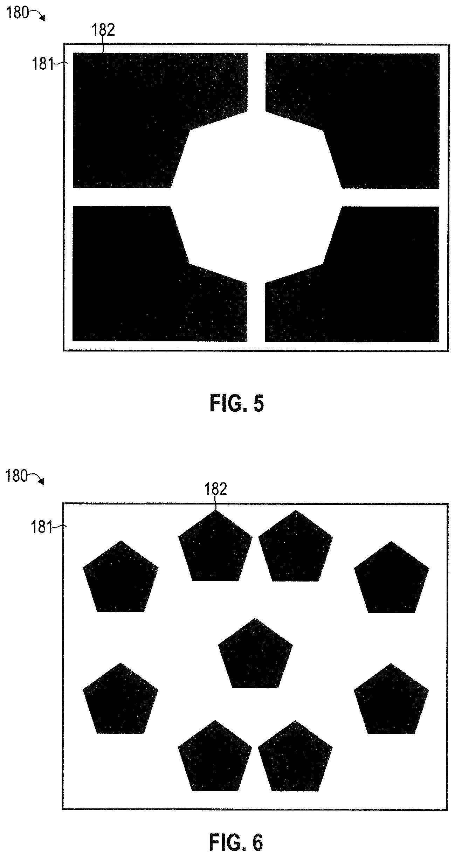

FIG. 5 illustriert Aspekte in Bezug auf ein Beleuchtungsmodul 180. In dem Beispiel der FIG. 5 sind die Lichtquellen 182 als organische Leuchtdioden ausgebildet. Diese organischen Leuchtdioden 182 weisen eine signifikante laterale Ausdehnung auf, zum Beispiel im Vergleich zu den Festkörper-Leuchtdioden, welche die Lichtquellen 182 in dem Beispiel der FIG. 4 implementieren. Durch Verwendung von laterale vergleichsweise ausgedehnten Lichtquellen 182, wie in dem Beispiel der FIG. 5, kann erreicht werden, dass das Leuchtfeld, das mit den verschiedenen entsprechenden Beleuchtungsrichtungen assoziiert ist, bereits eine vergleichsweise große Breite aufweist. Dann kann es möglich sein, dass zum Beispiel der Filter 300 eine relativ geringe Aufweitung vornehmen muss, um eine effiziente Artefaktreduktion zu erzielen. Dadurch kann eine Reduktion der maximalen Amplitude des Leuchtfelds durch den Filter 300 begrenzt werden. Dies kann einen Signal-zu-Rausch-Abstand vergrößern.

FIG. 6 illustriert Aspekte in Bezug auf ein Beleuchtungsmodul 180. In dem Beispiel der FIG. 6 sind die Lichtquellen 182 als Halogenlichtquellen ausgebildet. Auch die Halogenlichtquellen weisen eine vergleichsweise große laterale Ausdehnung auf, zum Beispiel im Vergleich zu den Festkörper-Leuchtdioden, welche die Lichtquellen 182 in dem Beispiel der FIG. 4 implementieren.

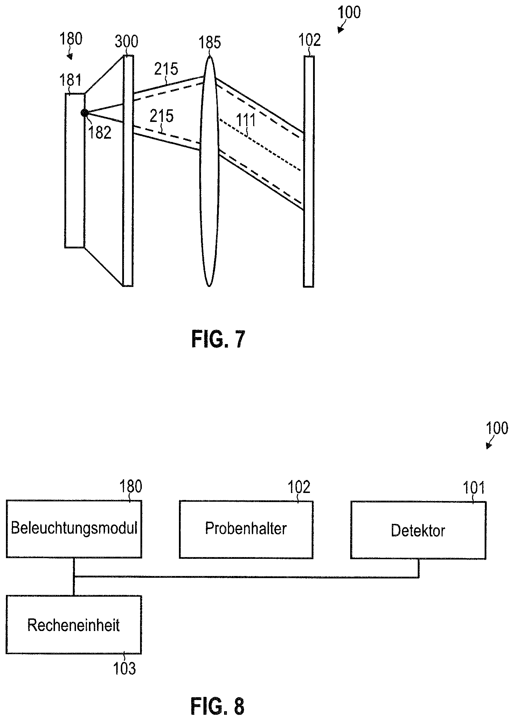

FIG. 7 illustriert Aspekte in Bezug auf den Filter 300. In dem Beispiel der FIG. 7 ist der Filter 300 in dem Strahlengang der optischen Vorrichtung 100 zwischen einem Probenhalter 102 und dem Beleuchtungsmodul 180 angeordnet. Insbesondere ist in dem Beispiel der FIG. 7 der Filter 300 zwischen einer Abbildungsoptik 185 - z.B. einem Objektiv oder einer Kollimatoroptik - der optischen Vorrichtung 100 und dem Beleuchtungsmodul 180 angeordnet. Der Filter ist eingerichtet, um für die verschiedenen Beleuchtungsrichtungen - die durch Betreiben unterschiedlicher Lichtquellen 182 des Beleuchtungsmoduls 180 implementiert werden können - das zugeordnete Leuchtfeld 215 aufzuweiten. Z.B. könnte der Filter 300 eine Streuscheibe aus Kunststoff umfassen.

In dem Beispiel der FIG. 7 ist der Filter 300 in naher Nachbarschaft zu dem Träger 181 des Beleuchtungsmoduls 180 angeordnet. Insbesondere ist in dem Beispiel der FIG. 7 der Träger 181 mit dem Filter 300 starr gekoppelt. Durch solche Techniken kann eine besonders effiziente Aufweitung des Leuchtfelds 215 der Beleuchtungsrichtung 111 erfolgen (in FIG. 7 ist das nicht-aufgeweitete Leuchtfeld 215 mit einer gestrichelten Linie dargestellt und das aufgeweitete Leuchtfeld 215 mit einer durchgezogene Linie dargestellt).

Die optische Vorrichtung 100 kann weiterhin einen Detektor aufweisen (in FIG. 7 nicht dargestellt). Der Detektor kann zum Beispiel in Auflicht-Geometrie angeordnet sein, d.h. in FIG. 7 linksseitig von dem Probenhalter 102 im Bereich des reflektierten Strahlengangs. Es wäre aber auch möglich, dass der Detektor in Durchlicht-Geometrie angeordnet ist, das heißt in FIG. 7 rechtsseitig von dem Probenhalter 102 im Bereich des transmittierten Strahlengangs.

FIG. 8 illustriert Aspekte in Bezug auf die optische Vorrichtung 100. Zum Beispiel könnte die optische Vorrichtung 101 Mikroskop implementieren. Zum Beispiel könnte die optische Vorrichtung 100 zu Fluoreszenz-Bildgebung eingerichtet sein. Zum Beispiel könnte die optische Vorrichtung ein Laser-Scanning-Mikroskop implementieren.

Die optische Vorrichtung 100 umfasst das Beleuchtungsmodul 180, dem Probenhalter 102 und einen Detektor 101. Wie obenstehend beschrieben, kann der Detektor zum Beispiel in Auflicht-Geometrie oder Durchlicht-Geometrie in Bezug auf das Beleuchtungsmodul 180 und den Probenhalter 102 angeordnet sein. Zum Beispiel kann der Detektor ein CCD-Detektor oder einen CMOS-Detektor sein.

Die optische Vorrichtung 100 umfasst auch eine Recheneinheit 103, zum Beispiel einen Prozessor und/oder einen Computer und/oder ein ASIC. Die Recheneinheit 103 ist eingerichtet, um das Beleuchtungsmodul 180 anzusteuern und um den Detektor 101 anzusteuern. Optional könnte die Recheneinheit 103 noch eingerichtet sein, um dem Probenhalter 102 zur Fokussierung des Objekts anzusteuern; es wäre auch eine manuelle Fokussierung des Objekts über ein händisches Verstellen des Probenhalters 102 denkbar.

Mittels der Recheneinheit 103 ist es möglich, eine digitale Nachbearbeitung von Bildern durchzuführen, die durch den Detektor 101 erfasst werden. Zum Beispiel könnte die Recheneinheit eingerichtet sein, um das Beleuchtungsmodul 180 zum Beleuchten des Objekts aus mehreren Mess-Beleuchtungsrichtungen anzusteuern. Die Recheneinheit 103 kann auch eingerichtet sein, um den Detektor zum Erfassen von Messbildern des Objekts anzusteuern, wobei die Messbildern den Mess-Beleuchtungsrichtungen zugeordnet sind.

Es sind unterschiedliche Zuordnungen zwischen den Messbildern und den Mess-Beleuchtungsrichtungen möglich, d.h. es kann eine 1:n-Zuordnung mit n >= 1 implementiert werden. Dabei kann n für verschiedene Messbilder variieren oder gleich sein. Dabei kann eine Trennung der Mess-Beleuchtungsrichtungen für die verschiedenen Messbilder z.B. im Zeitraum, Farbraum oder Polarisationsraum erfolgen. Das bedeutet, dass es z.B. möglich wäre, die den verschiedenen Messbildern zugeordneten Mess-Beleuchtungsrichtungen zeitsequentiell abzuarbeiten. Es wäre alternativ oder zusätzlich aber auch möglich, zumindest teilweise zeitparallel Messbilder zu erfassen; dabei kann zwischen den verschiedenen Mess-Beleuchtungsrichtungen z.B. über den Spektralbereich, d.h. die Farbe, des Lichts und/oder die Polarisation unterschieden werden. Es können entsprechende Filter vorgesehen sein.

Dann könnte die Recheneinheit weiterhin eingerichtet sein, um die Messbilder zum Erhalten eines Ergebnisbilds zu kombinieren. Durch das Kombinieren der Messbilder, die mit unterschiedlichen Beleuchtungsrichtungen assoziiert sind, kann erreicht werden, dass das Ergebnisbild einen Phasenkontrast aufweist. Durch geeignete Kombination können unterschiedlichste herkömmliche Phasenkontrast-Techniken nachgebildet bzw. emuliert werden, zum Beispiel Phasenkontrast nach Waller, DPC-Phasenkontrast, Zernike-Phasenkontrast, etc. Es kann auch die Hellfeld-Bildgebung implementiert werden.

Während bei Verwendung des Filters 300 eine Hardware-basierte Artefaktreduktion - in Echtzeit - durchgeführt werden kann, kann es in verschiedenen Beispielen alternativ oder zusätzlich möglich sein, dass die Recheneinheit 103 zu einer Software-basierten Artefaktreduktion eingerichtet ist. Auch die Software-basierte Artefaktreduktion kann in verschiedenen Beispielen in Echtzeit durchgeführt werden. Zum Beispiel wäre es möglich, für jedes Messbild eine Artefaktreduktion durchzuführen, welche ein entsprechendes Artefakt 121, 122 im jeweiligen Messbild aufgrund einer defokussiert angeordneten Verunreinigung 120 reduziert. Dann kann im Anschluss an das Durchführen der Artefaktreduktion für alle Messbilder das Kombinieren der Messbilder zum Erhalten eines Ergebnisbilds, das einen Phasenkontrast aufweist, erfolgen.

Um eine besonders genaue Software-basierte Artefaktreduktion durchzuführen, kann es möglich sein, zusätzlich zu den Messbildern - auf Grundlage welcher das Ergebnisbild bestimmt wird - Referenzbilder zu berücksichtigen, die mit Referenz-Beleuchtungsrichtungen assoziiert sind. Dadurch kann die Informationsgrundlage der Artefaktreduktion erweitert werden.

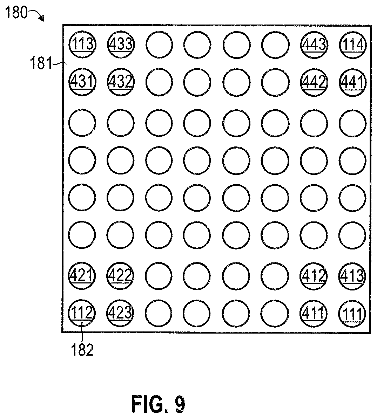

FIG. 9 illustriert Aspekte in Bezug auf Referenz-Beleuchtungsrichtungen 411-413, 421-423, 431-433, 441-443. In dem Beispiel der FIG. 9 ist dargestellt, wie das Beleuchtungsmodul 180 für unterschiedliche Messbilder, die mit verschiedenen Mess-Beleuchtungsrichtungen 111-114 assoziiert sind, zum Beleuchten des Objekts aus jeweils drei zugeordneten Referenz-Beleuchtungsrichtungen 411-413, 421-423, 431-433, 441-443 angesteuert werden kann. Für jede Referenz-Beleuchtungsrichtung 411-413, 421-423, 431-433, 441-443 kann dann der Detektor 101 angesteuert werden, um ein zugehöriges Referenzbild des Objekts zu erfassen. Dabei ist z.B. die Mess-Beleuchtungsrichtung 111 den Referenz-Beleuchtungsrichtungen 411-413 zugeordnet. Dabei ist z.B. die Mess-Beleuchtungsrichtung 112 den Referenz-Beleuchtungsrichtungen 421-423 zugeordnet. Dabei ist z.B. die Mess-Beleuchtungsrichtung 113 den Referenz-Beleuchtungsrichtungen 431-433 zugeordnet. Dabei ist z.B. die Mess-Beleuchtungsrichtung 114 den Referenz-Beleuchtungsrichtungen 441-443 zugeordnet.

Aus FIG. 9 ist ersichtlich, dass die Referenz-Beleuchtungsrichtungen 411-413, 421-423, 431-433, 441-443 jeweils um die entsprechende Mess-Beleuchtungsrichtung 111-114 gruppiert sind, wobei jedoch die Referenz-Beleuchtungsrichtungen 411-413, 421-423, 431-433, 441-443 verschieden von den Mess-Beleuchtungsrichtungen 111-114 sind. Insbesondere entsprechen die Mess-Beleuchtungsrichtungen 111-114 und die zugeordneten Referenz-Beleuchtungsrichtungen 411-413, 421-423, 431-433, 441-443 zueinander nächstgelegenen Lichtquellen 182 des Beleuchtungsmoduls 180. Dadurch kann erreicht werden, dass ein mittlerer Winkel, den die verschiedenen, einer Mess-Beleuchtungsrichtung 111-114 zugeordneten Referenz-Beleuchtungsrichtungen 411-413, 421-423, 431-433, 441-443 miteinander einschließen kleiner ist, als ein mittlerer Winkel, den die verschiedenen Mess-Beleuchtungsrichtungen 111-114 miteinander einschließen.

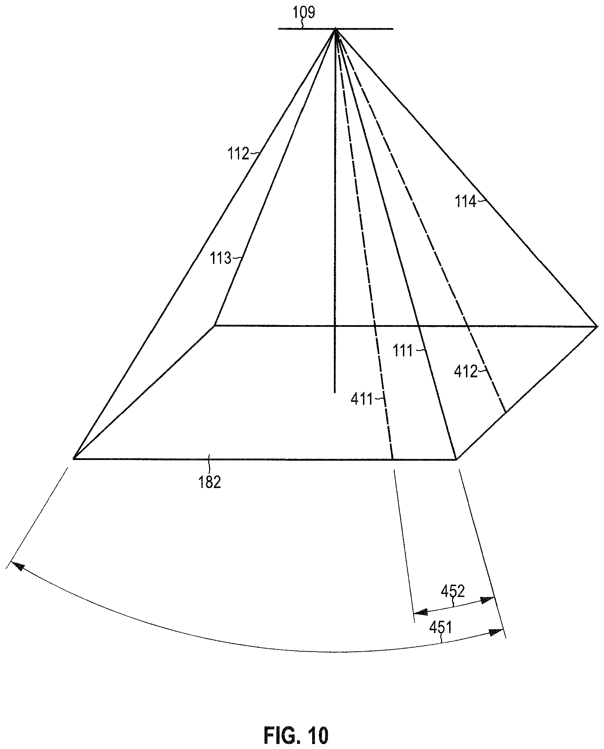

FIG. 10 illustriert Aspekte in Bezug auf Winkel 451, 452 zwischen Referenz-Beleuchtungsrichtungen 411,412 und Mess-Beleuchtungsrichtungen 111-114. Insbesondere ist FIG. 10 eine perspektivische Ansicht des Szenarios der FIG. 9, wobei in FIG. 10 aus Gründen der Übersichtlichkeit nicht alle Referenz-Beleuchtungsrichtungen dargestellt sind.

In FIG. 10 ist ein Winkel 452 dargestellt, den die Mess-Beleuchtungsrichtung 111 mit der Referenz-Beleuchtungsrichtung 411 einschließt. Aus FIG. 10 ist ersichtlich, dass dieser Winkel 452 signifikant kleiner ist als ein Winkel 451, den die Mess-Beleuchtungsrichtung 111 mit der Mess-Beleuchtungsrichtung 112 einschließt. Entsprechendes gilt auch für den mittleren Winkel zwischen der Mess-Beleuchtungsrichtung und den Referenz-Beleuchtungsrichtungen 411-413. Dies ist der Fall, da für die verschiedenen Mess-Beleuchtungsrichtungen 111-114 nicht-benachbarte Lichtquellen 182 des Beleuchtungsmoduls 180 verwendet werden (vergleiche FIG. 9); während für die Referenz-Beleuchtungsrichtungen 411-412 Lichtquellen 182 des Beleuchtungsmoduls 180 verwendet werden, die zu der jeweiligen Lichtquelle, die mit der entsprechenden Mess-Beleuchtungsrichtung 111 assoziiert ist, nächstgelegen ist.

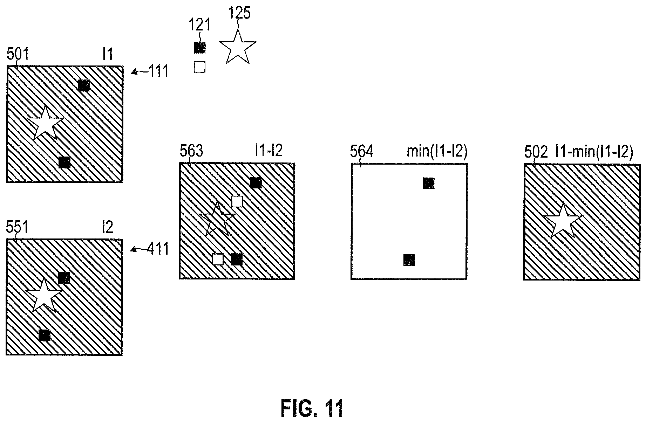

FIG. 11 illustriert Aspekte in Bezug auf eine digitale Artefaktreduktion. In dem Beispiel der FIG. 11 basiert die Artefaktreduktion auf der Verwendung einer Referenz-Beleuchtungsrichtung 411, der ein entsprechendes Referenzbild 551 zugeordnet ist. In FIG. 11 ist auch das zugehörige Messbild 501 dargestellt. Die verschiedenen Bilder 501,551 bilden das Objekt 125 ab und umfassen weiterhin Artefakte 121. Außerdem umfassen die Bilder 501, 551 einen Hintergrund (in FIG. 11 diagonal gestreift dargestellt). Ziel der Artefaktreduktion ist es, die Artefakte 121 zu unterdrücken, das Objekt 125 und den Hintergrund aber möglichst zu bewahren.

Aus einem Vergleich des Messbilds 501 mit dem zugehörigen Referenzbild 551 ist ersichtlich, dass die Artefakte 121 ihre Position signifikant verändert haben; während das Objekt 125 im Wesentlichen ortsfest verbleibt. Dies ist der Fall, da die zugehörige Verunreinigung 120 (in FIG. 11 nicht dargestellt) defokussiert außerhalb der Fokusebene 109 der optischen Vorrichtung 100 angeordnet ist und dadurch der Einfluss auf die Positionsänderung durch den Winkel zwischen der Referenz-Beleuchtungsrichtung 411 und der Mess-Beleuchtungsrichtung 111 für die Abbildung der Verunreinigung 120 als das Artefakt 121 besonders stark ist (vergleiche Gleichung 1). Da das Objekt 125 in der Fokusebene 109 angeordnet ist, weist dieses keine bzw. keine signifikante Positionsänderung zwischen dem Messbild 501 und dem Referenzbild 551 auf (vergleiche Gleichung 1); dabei sollte verstanden werden, dass für ein in Tiefenrichtung (d.h. parallel zum Strahlengang) ausgedehntes Objekt 125 auch eine gewisse Positionsänderung zwischen dem Messbild 111 und dem Referenzbild 411 vorliegen kann, insbesondere für defokussiert angeordnete Bereiche des Objekts 125. Deshalb kann es grundsätzlich erstrebenswert sein, den Winkel 452 zwischen der Referenz-Beleuchtungsrichtung 411 und der Mess-Beleuchtungsrichtung 111 vergleichsweise gering zu dimensionieren, um diese Positionsänderung in Bezug auf das Objekt 125 so klein wie möglich zu dimensionieren.

In dem Beispiel der FIG. 11 erfolgt ein Kombinieren des Messbilds 501 mit dem zugeordneten Referenzbild 551 zum Erhalten eines Korrekturbilds 563. In dem Beispiel der FIG. 11 erfolgt das Kombinieren durch Subtraktion des Referenzbilds 551 von dem Messbild 501. Das Korrekturbild 563 weist dann in dem Beispiel der FIG. 11 einen negativen Kontrast (in FIG. 11 schwarz dargestellt) und einen positiven Kontrast (in FIG. 11 weiß dargestellt) für die Artefakte 121 auf, wobei der negative Kontrast mit der Position der Artefakte in dem Messbild 501 assoziiert ist und der positive Kontrast mit der Position der Artefakte 121 in dem Referenzbild 551 assoziiert ist. In dem Korrekturbild 563 ist weiterhin das Objekt 125 schemenhaft vorhanden, da eine geringe Positionsänderung des Objekts 125 wie oben beschrieben zwischen dem Messbild 501 und dem Referenzbild 551 vorliegen kann. Entsprechendes gilt für den Hintergrund. Die Intensität des Objekts 125 und des Hintergrunds ist aber stark reduziert.

Dann wird für das Korrekturbild 563 eine Bildsegmentierung angewendet; die Bildsegmentierung basiert dabei auf einem Intensitätsschwellenwert. Basierend auf der Bildsegmentierung kann eine isolierte Artefaktregion in dem Korrekturbild 564 erhalten werden, die das Artefakt 121 beinhaltet. Dann kann das Artefakt 121 durch erneute Subtraktion der Artefaktregion des Korrekturbilds 564 von dem Messbild 501 aus dem Messbild 501 entfernt werden, um ein korrigiertes Messbild 502 zu erhalten.

In dem Beispiel der FIG. 11 sind die Verunreinigungen 120 Absorber; deshalb erscheinen die Artefakte 121 in dem Messbild 501 und dem Referenzbild 551 mit negativen Kontrast. In anderen Beispielen ist es auch möglich, dass die Verunreinigungen Streuer sind, sodass die Artefakte in den entsprechenden Messbildern und Referenzbildern mit positiven Kontrast aufscheinen.

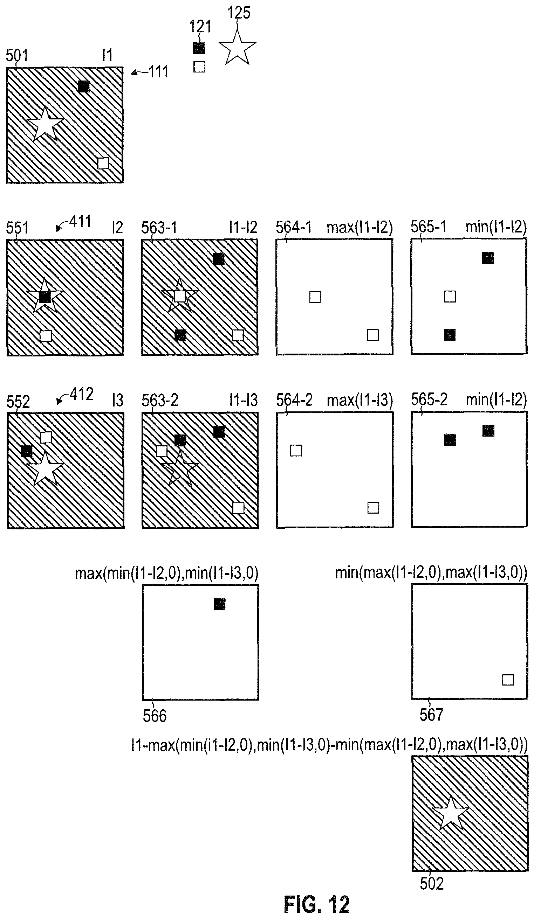

In manchen Beispielen kann es auch möglich sein, dass die Verunreinigungen 120 sowohl Absorber, als auch Streuer umfassen. Ein solches Beispiel ist in Bezug auf FIG. 12 dargestellt. FIG. 12 illustriert Aspekte in Bezug auf die digitale Artefaktreduktion.

Das Szenario der FIG. 12 entspricht grundsätzlich dem Szenario der FIG. 11, wobei jedoch anstatt eines einzigen Referenzbilds zwei Referenzbilder 551, 552 verwendet werden, die bei jeweils unterschiedlichen Referenz-Beleuchtungsrichtungen 411,412 erfasst werden. Durch das Verwenden einer größeren Anzahl von Referenz-Beleuchtungsrichtungen 411, 412 bzw. einer größeren Anzahl von Referenzbildern 551, 552 kann es möglich sein, eine besonders akkurate Artefaktreduktion auch bei Vorhandensein von Artefakten 121, die Streuern und Absorbern entsprechen, durchzuführen.

Im Detail wird ein Korrekturbild 563-1 durch Differenzbildung zwischen dem Messbild 501 und dem Referenzbild 551 erhalten. Ein Korrekturbild 563-2 wird durch Differenzbildung zwischen dem Messbild 501 und dem Referenzbild 552 erhalten. Die Korrekturbilder 564-1 und 565-1 werden jeweils durch Bildsegmentierung des Korrekturbilds 563-1 betreffend einen positiven und negativen Intensitätsschwellenwert erhalten. Die Korrekturbilder 564-2 und 565-2 werden jeweils durch Bildsegmentierung des Korrekturbilds 563-2 betreffend einen positiven und negativen Intensitätsschwellenwert erhalten. Die Korrekturbilder 564-1, 564-2, 565-1, 565-2 definieren daher isolierte Artefaktregionen, die den verschiedenen Artefakten 121 entsprechen. Dabei werden anschließend die verschiedenen Artefaktregionen der Korrekturbilder 564-1 und 565-1 basierend auf den Artefaktregionen der Korrekturbilder 564-2 und 565-2 korrigiert (oder andersherum), um die Korrekturbilder 566 und 567 zu erhalten. Im Detail wird das Korrekturbild 566 durch Anwenden einer weiteren Bildsegmentierung basierend auf einem positiven Intensitätsschwellenwert in Bezug auf die Korrekturbilder 565-1 und 565-2 erzeugt. Das Korrekturbild 567 wird durch Anwenden einer weiteren Bildsegmentierung basierend auf einem negativen Intensitätsschwellenwert in Bezug auf die Korrekturbilder 564-1 und 564-2 erzeugt.

Dadurch ist es möglich, die Artefakte 121 in dem Messbild 501 zu bestimmen, die jeweils Absorbern (Korrekturbild 566) und Streuern (Korrekturbild 567) entsprechen. Dies kann ausgenutzt werden, um ein korrigiertes Messbild 502 durch Kombination des Messbilds 501 mit den Korrekturbildern 566 und 567 zu erzeugen.

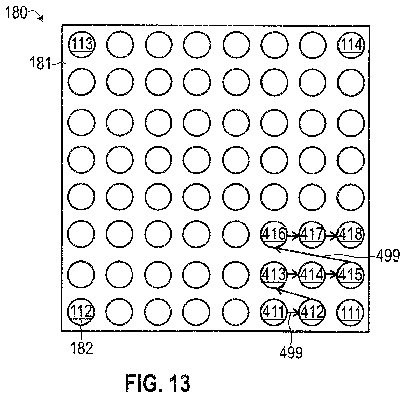

FIG. 13 illustriert Aspekte in Bezug auf eine Sequenz 499 von Referenz-Beleuchtungsrichtungen 411-418. Die Referenz-Beleuchtungsrichtungen 411-418 sind der Mess-Beleuchtungsrichtung 111 zugeordnet (in FIG. 13 sind die Referenz-Beleuchtungsrichtungen für die Mess-Beleuchtungsrichtungen 112-114 aus Gründen der Übersichtlichkeit nicht dargestellt). Aus FIG. 13 ist ersichtlich, dass die Sequenz 499 in Bezug auf eine örtliche Abfolge der Referenz-Beleuchtungsrichtungen 411-418 definiert ist. Benachbarte Elemente der Sequenz 499 entsprechen deshalb benachbarten Referenz-Beleuchtungsrichtungen 411-418. Dabei ist es grundsätzlich entbehrlich, dass eine zeitliche Reihenfolge, mit der die Sequenz 499 abgearbeitet wird und entsprechende Referenzbilder erfasst werden, dieser örtlichen Abfolge der Sequenz 499 entspricht.

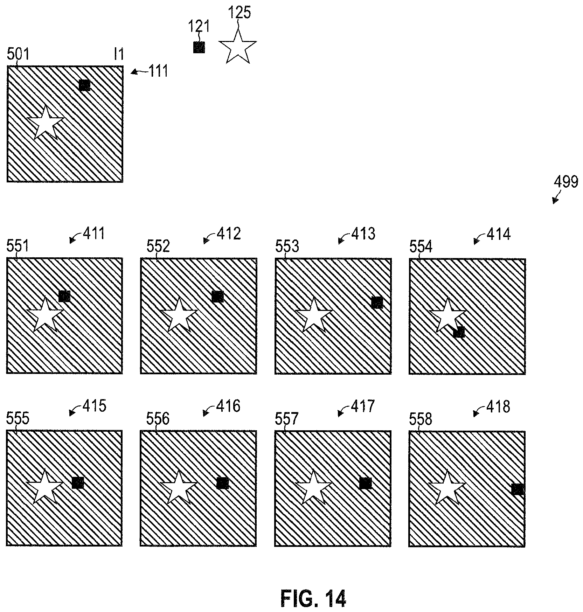

In FIG. 14 sind die verschiedenen Referenzbilder 551-558, die den Referenz-Beleuchtungsrichtungen 411-418 der Sequenz 499 entsprechen, dargestellt. Aus FIG. 14 ist ersichtlich, dass aufgrund der örtlichen Abfolge eine systematische Bewegung des Artefakts 121 in den verschiedenen Referenzbildern 551-558 vorliegt. Es ist möglich, dass die Bewegung des Artefakts 121 als Funktion der jeweiligen Sequenz 499 in den Referenzbildern 551 - 558 identifiziert wird. Dann kann es möglich sein, dass die Artefaktreduktion auf Grundlage der identifizierten Bewegung des Artefakts durchgeführt wird. Zum Beispiel wäre es möglich, dass bei identifizierten Bewegung des Artefakts 121 das Artefakt 121 aus dem Messbild 501 herausgerechnet werden kann. Dazu kann es möglich sein, dass das Messbild 501 zumindest mit einem der zugeordneten Referenzbildern 551-558 basierend auf der identifizierten Bewegung des Artefakts 121 kombiniert wird.

Dabei können zur Identifizierung der Bewegung des Artefakts 121 in der Sequenz 499 unterschiedliche Techniken eingesetzt werden. Zum Beispiel können Techniken der Bildsegmentierung und/oder Kantenerkennung verwendet werden. Es können auch Optimierungstechniken eingesetzt werden. Entsprechende Techniken zur Identifizierung der Bewegung sind zum Beispiel aus dem oben genannten Artikel von XUE T. et al. bekannt.

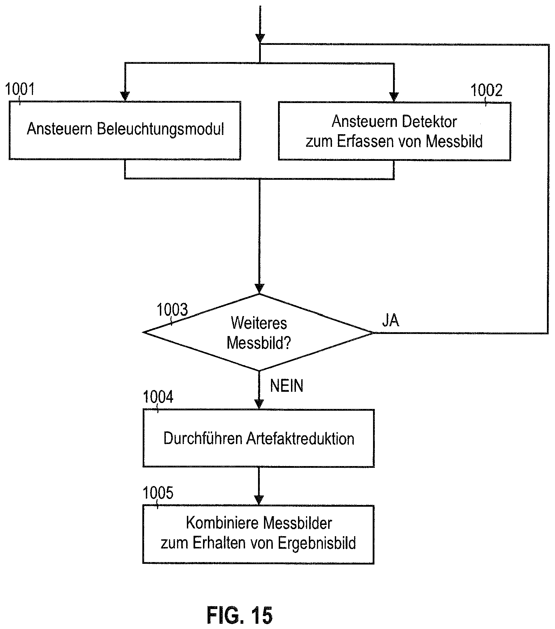

FIG. 15 ist ein Flussdiagramm eines beispielhaften Verfahrens. Dabei wird in den Schritten 1001 und 1002 jeweils das Beleuchtungsmodul 180 und der Detektor 101 angesteuert, um für verschiedene Mess-Beleuchtungsrichtungen 111-114 jeweils ein zugehöriges Messbild 501 zu erfassen. Dabei ist es möglich, pro Messbild 501 mehr als eine Beleuchtungsrichtung zu implementieren: Dazu kann z.B. in 1001 das Beleuchtungsmodul 1001 derart angesteuert werden, dass mehr als eine Lichtquelle 182 aktiviert wird.

In 1003 wird überprüft, ob ein weiteres Messbild 501 benötigt wird; ist dies der Fall, so werden die Schritte 1001 und 1002 erneut durchgeführt. Zum Beispiel kann bei 1003 berücksichtigt werden, ob Phasenkontrast-Bildgebung durchgeführt werden soll - und wenn ja, welche Art von Phasenkontrast-Bildgebung angewendet werden soll. Je nach Art der Phasenkontrast-Bildgebung kann beispielsweise eine unterschiedliche Anzahl von Messbildern 501 benötigt werden.

Wird in Schritt 1003 festgestellt, dass kein weiteres Messbild 501 benötigt wird, so wird in Schritt 1004 die Artefaktreduktion für jedes zuvor in den verschiedenen Iterationen von Schritt 1002 erfasstes Messbild 501 durchgeführt, um jeweils ein korrigiertes Messbild 502 zu erhalten.

Dann werden die artefaktreduziertes Messbilder 502 in Schritt 1005 miteinander kombiniert, um ein Ergebnisbild zu erhalten. Das Ergebnisbild kann optional einen Phasenkontrast aufweisen.

In verschiedenen Beispielen wäre es möglich, dass die Artefaktreduktion in Schritt 1004 mehrfach, d.h. in mehreren Iterationen ausgeführt wird. Zum Beispiel wäre es möglich, dass jeweils in mehreren Iterationen ein artefaktreduziertes Messbild 502 erzeugt wird. Zum Beispiel könnten die in Bezug auf die FIGs. 11 und 12 voranstehend beschriebenen Operationen mehrfach iterativ ausgeführt werden, um jeweils eine verbesserte Artefaktreduktion zu erzielen.

Schritt 1004 könnte z.B. auch vor Schritt 1003 ausgeführt werden, d.h. jeweils für das zuvor erfasste Messbild.

Zum Durchführen der Artefaktreduktion in Schritt 1004 können unterschiedlichste Techniken eingesetzt werden. Beispielsweise kann es möglich sein, basierend auf einer oder mehreren Referenzbildern 551, 552 ein Korrekturbild zu bestimmen, welches indikativ für das Artefakt 121 in dem assoziierten Messbild 501 ist; dazu kann zum Beispiel eine Bildsegmentierung ausgeführt werden, wie voranstehend in Bezug auf die FIGs. 11 und 12 erläutert. Alternativ oder zusätzlich wäre es auch möglich, dass eine Sequenz 499 von Referenzbildern 551-558 erfasst wird und eine Bewegung des Artefakts 121 in der Sequenz 499 identifiziert wird. Dann kann auf Grundlage der identifizierten Bewegung die Artefaktreduktion durchgeführt werden. In solchen Techniken erfolgt jedenfalls das Erfassen eines oder mehrerer Referenzbilder 551-558.

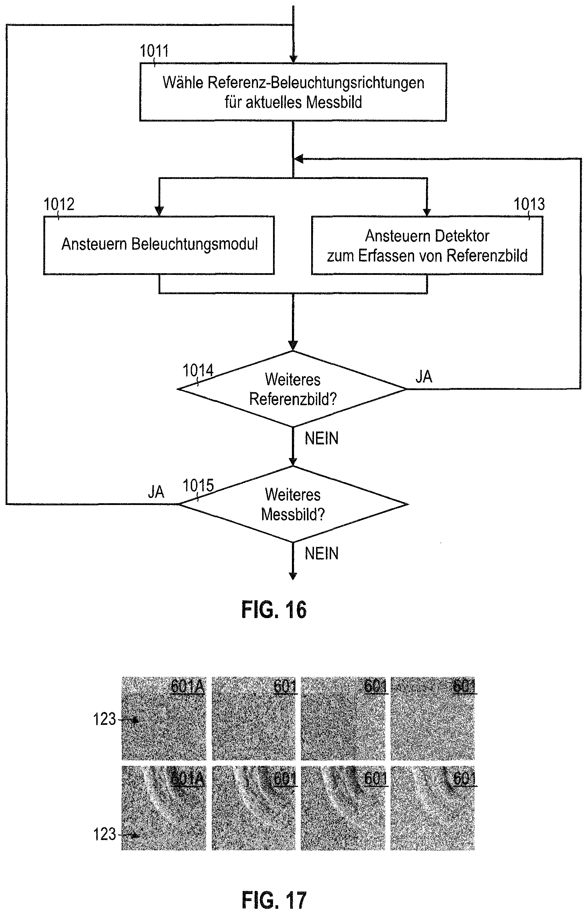

FIG. 16 ist ein Flussdiagramm eines Verfahrens gemäß verschiedener Beispiele. FIG. 16 illustriert Aspekte in Bezug auf das Erfassen eines oder mehrere Referenzbilder 551-558.

Dabei wird zunächst, in Schritt 1011, für eine aktuelle Mess-Beleuchtungsrichtung 111 bzw. für ein aktuelles Messbild 501 eine oder mehrere Referenz-Beleuchtungsrichtungen 411-418 ausgewählt.

Dann werden in den Schritten 1012 und 1013 das Beleuchtungsmodul 180 und der Detektor 101 zeitsynchronisiert angesteuert, um jeweils für eine aktuelle Referenz-Beleuchtungsrichtung 411-418 ein zugehöriges Referenzbild 551-558 zu erfassen. In Schritt 1014 wird überprüft, ob ein weiteres Referenzbild 551-558 erfasst werden muss; falls dies der Fall ist, werden die Schritte 1012 und 1013 erneut durchgeführt.

In manchen Beispielen kann eine einzige Referenz-Beleuchtungsrichtung 411-418 für jedes Referenzbild 551-558 implementiert werden. In anderen Beispielen wäre es aber auch möglich, dass zumindest einigen Referenzbildern 551-558 mehr als eine einzige Referenz-Beleuchtungsrichtung 411-418 zugeordnet ist. Dazu kann z.B. in 1012 das Beleuchtungsmodul 1001 derart angesteuert werden, dass mehr als eine Lichtquelle 182 aktiviert wird.

In Schritt 1015 wird überprüft, ob für ein weiteres Messbild 501 ein oder mehrere Referenzbilder zu erfassen sind. Ist dies der Fall, so werden die Schritte 1011-1014 erneut durchgeführt.

Die Schritte 1011-1015 zum Erfassen der Referenzbilder 551-558 können zum Beispiel vor oder nach dem Erfassen der verschiedenen Messbilder 502, d.h. vor oder nach dem Durchführen der Schritte 1001 und 1002, ausgeführt werden. Es wäre auch möglich, dass das Erfassen der Referenzbilder 551-558 zeitlich überlappend mit dem Erfassen der Messbilder 502 erfolgt. Dies kann insbesondere bei zeitlich veränderlichen Probenobjekten erstrebenswert sein, um Bewegungsartefakte zu vermeiden.

FIG. 17 illustriert Aspekte in Bezug auf Ergebnisbilder 601, die basierend auf der Kombination verschiedener Messbilder erhalten werden, die zuvor basierend auf einer oder mehreren Iterationen der Artefaktreduktion wie in Bezug auf FIG. 12 voranstehend beschrieben korrigiert wurden. Zum Vergleich sind auch unkorrigierte Ergebnisbilder 601A dargestellt. Aus FIG. 17 ist ersichtlich, dass die Qualität der Artefaktreduktion für eine größere Anzahl von Iterationen zunimmt. Es kann aber bereits mit einer Iteration der Artefaktreduktion eine signifikante Unterdrückung des Artefakts 123 erreicht werden.

Zusammenfassend wurden obenstehend Techniken beschrieben, um bei der winkelselektiven Beleuchtung mit mehreren diskret angeordneten Lichtquellen Artefaktreduktion durchzuführen.

Den Techniken liegt die Erkenntnis zugrunde, dass sich bei der winkelselektiven Beleuchtung defokussiert angeordnete Verunreinigungen zu ausgedehnten Artefakten verstärken, die ein Muster aufweisen, das der strukturierten Beleuchtungspupille entspricht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise wurden voranstehend verschiedene Beispiele in Bezug auf die Phasenkontrast-Bildgebung beschrieben. Es ist aber möglich, die hierin beschriebenen Techniken z.B. auch auf die herkömmliche Hellfeld-Bildgebung anzuwenden, bei der eine strukturierte Beleuchtung verwendet wird. Dabei kann bei der Hellfeld-Bildgebung erstrebenswert sein, möglichst viele oder alle Lichtquellen des entsprechenden Beleuchtungsmoduls zu aktivieren, um derart eine gleichmäßige Beleuchtung des Objekts aus unterschiedlichen Raumrichtungen zu erzielen.

Ferner wurden obenstehend verschiedene Beispiele beschrieben, bei denen die verschiedenen Messbilder jeweils einer einzigen Mess-Beleuchtungsrichtung zugeordnet sind. Es wäre aber in anderen Beispielen auch möglich, dass die verschiedenen Messbilder mehr als einer einzelnen Mess-Beleuchtungsrichtung zugeordnet sind, z.B. zwei, drei oder mehr Mess-Beleuchtungsrichtungen. Auch in solchen Fällen können die hierin beschriebenen Techniken zur Artefaktkorrektur angewendet werden.

**Bezugszeichenliste**

| | |
|---|---|
| 111 - 114 | Beleuchtungsrichtung |
| 100 | Optische Vorrichtung |
| 101 | Detektor |
| 102 | Probenhalter |
| 103 | Recheneinheit |
| 105 | Positionsänderung |
| 108 | Optische Achse |
| 109 | Fokusebene |
| 111A | Winkel |
| 111B | Winkel |
| 120 | Verunreinigung |
| 121 | Artefakt |
| 122 | Artefakt |
| 123 | Artefakt |
| 125 | Objekt |
| 180 | Beleuchtungsmodul |
| 181 | Träger |
| 182 | Lichtquelle |
| 185 | Abbildungsoptik |
| 215 | Leuchtfeld |
| 217-2 | Breite des Leuchtfelds |
| 217-1 | Breite des Leuchtfelds |
| 300 | Filter |
| 451 | Winkel |
| 452 | Winkel |
| 501 | Messbild |
| 502 | Korrigiertes Messbild |
| 566 | Korrekturbild |
| 567 | Korrekturbild |
| 601 | Ergebnisbild |
| 601A | Ergebnisbild |
| 411 - 418 | Beleuchtungsrichtung |
| 421 - 423 | Beleuchtungsrichtung |
| 431 - 433 | Beleuchtungsrichtung |
| 441 - 443 | Beleuchtungsrichtung |
| 551 - 558 | Referenzbild |
| 565-1, 565-2 | Korrekturbild |

563, 563-1, 563-2      Korrekturbild
564, 564-1, 564-2      Korrekturbild
1001 - 1005      Schritt
1011 - 1015      Schritt

## Patentansprüche

**1.** Verfahren, das umfasst:

- Ansteuern eines Beleuchtungsmoduls (180) einer optischen Vorrichtung (100) und mit mehreren Lichtquellen (182) zum Beleuchten eines Objekts (125) aus mehreren Mess-Beleuchtungsrichtungen (111-114),
- Ansteuern eines Detektors (101) der optischen Vorrichtung (100) zum Erfassen von Messbildern (501, 502) des Objekts (125), wobei die Messbilder (501, 502) den Mess-Beleuchtungsrichtungen (111-114) zugeordnet sind,
- für jedes Messbild (501, 502): Ansteuern des Beleuchtungsmoduls (180) zum Beleuchten des Objekts (125) aus mindestens einer zugeordneten Referenz-Beleuchtungsrichtung (411-413, 421-423, 431-433), wobei die Referenz-Beleuchtungsrichtung von der Mess-Beleuchtungsrichtung verschieden ist,
- für jede Referenz-Beleuchtungsrichtung (411-413, 421-423, 431-433): Ansteuern des Detektors (101) zum Erfassen eines Referenzbilds (551-558) des Objekts (125),
- für jedes Messbild (501, 502): Durchführen einer Artefaktreduktion, welche ein Artefakt (121-123) im jeweiligen Messbild (501, 502) aufgrund einer defokussiert angeordneten Verunreinigung (120) reduziert,
- beim Durchführen der Artefaktreduktion, für jedes Messbild (501, 502): Kombinieren des jeweiligen Messbilds (501, 502) mit dem mindestens einen zugeordneten Referenzbild (551-558) zum Erhalten mindestens eines Korrekturbilds (563, 563-1, 563-2, 564, 564-1, 564-2, 565-1, 565-2, 566, 567), das indikativ für das Artefakt (121-123) ist,
- nach dem Durchführen der Artefaktreduktionen für alle Messbilder (501, 502): Kombinieren der Messbilder (501, 502) zum Erhalten eines Ergebnisbilds (601).

**2.** Verfahren nach Anspruch 1, das weiterhin umfasst:

- beim Durchführen der Artefaktreduktion, für jedes Korrekturbild (563, 563-1, 563-2, 564, 564-1, 564-2, 565-1, 565-2, 566, 567): Anwenden einer Bildsegmentierung basierend auf einem Intensitätsschwellenwert zum Erhalten einer isolierten Artefaktregion in dem Korrekturbild (563, 563-1, 563-2, 564, 564-1, 564-2, 565-1, 565-2, 566, 567), die das Artefakt (121-123) beinhaltet,
- beim Durchführen der Artefaktreduktion, für jedes Messbild (501, 502): Entfernen des Artefakts basierend auf der Artefaktregion.

**3.** Verfahren nach Anspruch 2,

wobei die Verunreinigung (120) Streuer und Absorber umfasst,
wobei das Beleuchtungsmodul (180) für jedes Messbild (501, 502) zum Beleuchten des Objekts (125) aus mindestens zwei zugeordneten Referenz-Beleuchtungsrichtungen (411-413, 421-423, 431-433) angesteuert wird,
wobei das Verfahren weiterhin umfasst:

- beim Durchführen der Artefaktreduktion, für jedes Korrekturbild (563, 563-1, 563-2, 564, 564-1, 564-2, 565-1, 565-2, 566, 567): Korrigieren der jeweiligen Artefaktregion basierend auf der Artefaktregion eines weiteren Korrekturbilds (563, 563-1, 563-2, 564, 564-1, 564-2, 565-1, 565-2, 566, 567).

**4.** Verfahren nach Anspruch 1, das weiterhin umfasst:

- für jedes Messbild (501, 502): Ansteuern des Beleuchtungsmoduls (180) zum Beleuchten des Objekts (125) aus einer zugeordneten Sequenz (499) von Referenz-Beleuchtungsrichtungen (411-413, 421-423, 431-433),
- für jede Referenz-Beleuchtungsrichtung (411-413, 421-423, 431-433): Ansteuern des Detektors (101) zum Erfassen eines Referenzbilds (551-558) des Objekts (125),
- beim Durchführen der Artefaktreduktion, für jedes Messbild (501, 502): Identifizieren einer Bewegung des Artefakts als Funktion der jeweiligen Sequenz (499) der Referenz-Beleuchtungsrichtungen (411-413, 421-423, 431-433) in den zugeordneten Referenzbildern (551-558) und wobei die jeweilige Artefaktreduktion auf der jeweils identifizierten Bewegung des Artefakts basiert.

5. Verfahren nach Anspruch 4, das weiterhin umfasst:

- beim Durchführen der Artefaktreduktion, für jedes Messbild (501, 502): Kombinieren des jeweiligen Messbilds (501, 502) mit zumindest einem der zugeordneten Referenzbilder (551-558) basierend auf der identifizierten Bewegung des Artefakts.

6. Verfahren nach einem der voranstehenden Ansprüche,

wobei die mindestens eine Mess-Beleuchtungsrichtung (111-114), die einem ausgewählten Messbild (501, 502) zugeordnet ist, mit den übrigen Mess-Beleuchtungsrichtungen (111-114) einen ersten mittleren Winkel einschließt,
wobei die mindestens eine Mess-Beleuchtungsrichtung (111-114), die dem ausgewählten Messbild (501, 502) zugeordnet ist, mit der zugeordneten mindestens einen Referenz-Beleuchtungsrichtung (411-413, 421-423, 431-433) einen zweiten mittleren Winkel einschließt, der kleiner als der erste mittlere Winkel ist.

7. Verfahren nach einem der voranstehenden Ansprüche,
wobei die mindestens eine Mess-Beleuchtungsrichtung (111-114), die dem ausgewählten Messbild (501, 502) zugeordnet ist, und die zugeordnete mindestens eine Referenz-Beleuchtungsrichtung (411-413, 421-423, 431-433) zueinander nächstgelegenen Lichtquellen (182) des Beleuchtungsmoduls (180) entsprechen.

8. Verfahren nach einem der voranstehenden Ansprüche,
wobei die Referenz-Beleuchtungsrichtungen (411-413, 421-423, 431-433) zumindest teilweise verschieden von den Mess-Beleuchtungsrichtungen (111-114) sind.

9. Verfahren nach einem der voranstehenden Ansprüche, das weiterhin umfasst:

- Ansteuern eines Probenhalters (102) der optischen Vorrichtung (100), der eingerichtet ist, um das Objekt (125) Strahlengang der optischen Vorrichtung (100) zu fixieren, zum Fokussieren des Objekts (125).

10. Verfahren nach einem der voranstehenden Ansprüche,
wobei die Artefaktreduktion für jedes Messbild (501, 502) mehrfach iterativ durchgeführt wird.

11. Verfahren nach einem der voranstehenden Ansprüche,
wobei das Durchführen der Artefaktreduktion in Echtzeit geschieht.

12. Optische Vorrichtung (100), die umfasst:

- einen Probenhalter (102), der eingerichtet ist, um ein Objekt (125) im Strahlengang der optischen Vorrichtung (100) zu fixieren,
- ein Beleuchtungsmodul (180), das mehrere Lichtquellen (182) umfasst und eingerichtet ist, um das Objekt (125) aus mehreren Beleuchtungsrichtungen durch Betreiben der Lichtquellen (182) zu beleuchten,
- einen Detektor (101), der im Strahlengang der optischen Vorrichtung (100) angeordnet ist,
- eine Recheneinheit (103), die eingerichtet ist, um das Beleuchtungsmodul (180) zum Beleuchten eines Objekts (125) aus mehreren Mess-Beleuchtungsrichtungen (111-114) anzusteuern,

wobei die Recheneinheit (103) weiterhin eingerichtet ist, um den Detektor (101) zum Erfassen von Messbildern (501, 502) des Objekts (125) anzusteuern, wobei die Messbilder (501, 502) den Mess-Beleuchtungsrichtungen (111-114) zugeordnet sind,
wobei die Recheneinheit weiterhin für jedes Messbild (501, 502) eingerichtet ist, um das Beleuchtungsmodul (180) zum Beleuchten des Objekts (125) aus mindestens einer zugeordneten Referenz-Beleuchtungsrichtung anzusteuern, wobei die Referenz-Beleuchtungsrichtung von der Mess-Beleuchtungsrichtung verschieden ist, und wobei die Recheneinheit weiterhin für jede Referenz-Beleuchtungsrichtung eingerichtet ist, um den Detektor zum Erfassen eines Referenzbilds (551-558) des Objekts anzusteuern,
wobei die Recheneinheit (103) weiterhin, für jedes Messbild (501, 502), eingerichtet ist, um eine Artefaktreduktion durchzuführen, welche ein Artefakt (121-123) im jeweiligen Messbild (501, 502) aufgrund einer defokussiert angeordneten Verunreinigung (120) reduziert,
wobei die Recheneinheit beim Durchführen der Artefaktreduktion für jedes Messbild (501, 502) eingerichtet ist, um das jeweilige Messbild (501, 502) mit dem mindestens einen zugeordneten Referenzbild (551-558) zum Erhalten mindestens eines Korrekturbilds, das indikativ für das Artefakt ist, zu kombinieren,
wobei die Recheneinheit (103) weiterhin eingerichtet ist, um nach dem Durchführen der Artefaktreduktion für alle Messbilder (501, 502) die Messbilder (501, 502) zum Erhalten eines Ergebnisbilds (601) zu kombinieren.

**13.** Optische Vorrichtung (100) nach Anspruch 12,
wobei die Optische Vorrichtung (100) eingerichtet ist, um das Verfahren nach einem der Ansprüche 1 - 11 auszuführen.

**Claims**

**1.** Method which comprises:

- controlling an illumination module (180) of an optical device (100) and with a plurality of light sources (182) for illuminating an object (125) from a plurality of measurement illumination directions (111-114),
- controlling a detector (101) of the optical device (100) for capturing measurement images (501, 502) of the object (125), wherein the measurement images (501, 502) are assigned to the measurement illumination directions (111-114),
- for each measurement image (501, 502): controlling the illumination module (180) to illuminate the object (125) from at least one associated reference illumination direction (411-413, 421-423, 431-433), wherein the reference illumination direction is different from the measurement illumination direction,
- for each reference illumination direction (411-413, 421-423, 431-433): controlling the detector (101) to capture a reference image (551-558) of the object (125),
- for each measurement image (501, 502): carrying out artefact reduction, which reduces an artefact (121-123) in the respective measurement image (501, 502) because of an impurity (120) arranged out of focus,
- when carrying out the artefact reduction, for each measurement image (501, 502): combining the respective measurement image (501, 502) with the at least one associated reference image (551-558) to obtain at least one corrected image (563, 563-1, 563-2, 564, 564-1, 564-2, 565-1, 565-2, 566, 567), which is indicative of the artefact (121-123),
- after the artefact reductions have been carried out for all the measurement images (501, 502): combining the measurement images (501, 502) to obtain a resultant image (601).

**2.** Method according to Claim 1, which also comprises:

- when carrying out the artefact reduction, for each corrected image (563, 563-1, 563-2, 564, 564-1, 564-2, 565-1, 565-2, 566, 567): applying image segmentation based on an intensity threshold value to obtain an isolated artefact region in the corrected image (563, 563-1, 563-2, 564, 564-1, 564-2, 565-1, 565-2, 566, 567) which includes the artefact (121-123),
- when carrying out the artefact reduction, for each measurement image (501, 502): removing the artefact on the basis of the artefact region.

**3.** Method according to Claim 2,

wherein the impurity (120) comprises scatterers and absorbers,
wherein the illumination module (180) is controlled for each measurement image (501, 502) to illuminate the object (125) from at least two associated reference illumination directions (411-413, 421-423, 431-433),
wherein the method further comprises:

- when carrying out the artefact reduction, for each corrected image (563, 563-1, 563-2, 564, 564-1, 564-2, 565-1, 565-2, 566, 567): correcting the respective artefact region on the basis of the artefact region of a further corrected image (563, 563-1, 563-2, 564, 564-1, 564-2, 565-1, 565-2, 566, 567).

**4.** Method according to Claim 1, which further comprises:

- for each measurement image (501, 502): controlling the illumination module (180) to illuminate the object (125) from an associated sequence (499) of reference illumination directions (411-413, 421-423, 431-433),
- for each reference illumination direction (411-413, 421-423, 431-433): controlling the detector (101) to capture a reference image (551-558) of the object (125),
- when carrying out the artefact reduction, for each measurement image (501, 502): identifying a movement of the artefact as a function of the respective sequence (499) of reference illumination directions (411-413, 421-423, 431-433) in the associated reference images (551-558), and wherein the respective artefact reduction is based on the respectively identified movement of the artefact.

5. Method according to Claim 4, which further comprises:

- when carrying out the artefact reduction, for each measurement image (501, 502): combining the respective measurement image (501, 502) with at least one of the associated reference images (551-558) on the basis of the identified movement of the artefact.

6. Method according to one of the preceding claims,

wherein the at least one measurement illumination direction (111-114) which is assigned to a selected measurement image (501, 502) encloses a first average angle with the remaining measurement illumination directions (111-114),
wherein the at least one measurement illumination direction (111-114) which is associated with the selected measurement image (501, 502) encloses a second average angle with the associated at least one reference illumination direction (411-413, 421-423, 431-433) which is smaller than the first average angle.

7. Method according to one of the preceding claims,
wherein the at least one measurement illumination direction (111-114) which is associated with the selected measurement image (501, 502) and the associated at least one reference illumination direction (411-413, 421-423, 431-433) correspond to light sources (182) of the illumination module (180) which are placed closest to one another.

8. Method according to one of the preceding claims,
wherein the reference illumination directions (411-413, 421-423, 431-433) are at least partly different from the measurement illumination directions (111-114).

9. Method according to one of the preceding claims, which further comprises:

- controlling a sample holder (102) of the optical device (100), which is set up to fix the object (125) beam path of the optical device (100), to focus the object (125) .

10. Method according to one of the preceding claims,
wherein the artefact reduction is carried out iteratively repeatedly for each measurement image (501, 502) .

11. Method according to one of the preceding claims,
wherein the artefact reduction is carried out in real time.

12. Optical device (100) which comprises:

- a sample holder (102), which is set up to fix an object (125) in the beam path of the optical device (100),
- an illumination module (180) which comprises a plurality of light sources (182) and is set up to illuminate the object (125) from a plurality of illumination directions by operating the light sources (182),
- a detector (101), which is arranged in the beam path of the optical device (100),
- a computing unit (103), which is set up to control the illumination module (180) to illuminate an object (125) from a plurality of measurement illumination directions (111-114),

wherein the computing unit (103) is also set up to control the detector (101) to capture measurement images (501, 502) of the object (125), wherein the measurement images (501, 502) are assigned to the measurement illumination directions (111-114),
wherein the computing unit is also set up for each measurement image (501, 502) to control the illumination module (180) to illuminate the object (125) from at least one associated reference illumination direction, wherein the reference illumination direction is different from the measurement illumination direction,
and wherein the computing unit is also set up for each reference illumination direction to control the detector to capture a reference image (551-558) of the object,
wherein the computing unit (103) is also set up for each measurement image (501, 502) to carry out artefact reduction, which reduces an artefact (121-123) in the respective measurement image (501, 502) on the basis of an impurity (120) which is arranged out of focus,
wherein the computing unit is set up, when carrying out the artefact reduction for each measurement image (501, 502), to combine the respective measurement image (501, 502) with the at least one associated reference image (551-558) to obtain at least one corrected image, which is indicative of the artefact,
wherein the computing unit (103) is also set up, after carrying out the artefact reduction for all the measurement images (501, 502), to combine the measurement images (501, 502) to obtain a resultant image (601).

**13.** Optical device (100) according to Claim 12,
wherein the optical device (100) is set up to carry out the method according to one of Claims 1-11.

**Revendications**

**1.** Procédé, qui comprend :

- la commande d'un module d'éclairage (180) d'un dispositif optique (100) et comprenant plusieurs sources de lumière (182) pour éclairer un objet (125) depuis plusieurs directions d'éclairage de mesure (111-114),
- la commande d'un détecteur (101) du dispositif optique (100) pour acquérir des images de mesure (501, 502) de l'objet (125), les images de mesure (501, 502) étant associées aux directions d'éclairage de mesure (111-114),
- pour chaque image de mesure (501, 502) : la commande du module d'éclairage (180) pour éclairer l'objet (125) depuis au moins une direction d'éclairage de référence associée (411-413, 421-423, 431-433), la direction d'éclairage de référence étant différente de la direction d'éclairage de mesure,
- pour chaque direction d'éclairage de référence (411-413, 421-423, 431-433) : la commande du détecteur (101) pour acquérir une image de référence (551-558) de l'objet (125),
- pour chaque image de mesure (501, 502) : la réalisation d'une réduction d'artefact, qui réduit un artefact (121-123) dans l'image de mesure respective (501, 502) en raison d'une impureté (120) agencée de manière défocalisée,
- lors de la réalisation de la réduction d'artefact, pour chaque image de mesure (501, 502) : la combinaison de l'image de mesure respective (501, 502) avec l'au moins une image de référence associée (551-558) pour obtenir au moins une image de correction (563, 563-1, 563-2, 564, 564-1, 564-2, 565-1, 565-2, 566, 567), qui est indicative de l'artefact (121-123),
- après la réalisation des réductions d'artefact pour toutes les images de mesure (501, 502) : la combinaison des images de mesure (501, 502) pour obtenir une image de résultat (601).

**2.** Procédé selon la revendication 1, qui comprend en outre :

- lors de la réalisation de la réduction d'artefact, pour chaque image de correction (563, 563-1, 563-2, 564, 564-1, 564-2, 565-1, 565-2, 566, 567) : l'application d'une segmentation d'image sur la base d'une valeur de seuil d'intensité pour obtenir une région d'artefact isolée dans l'image de correction (563, 563-1, 563-2, 564, 564-1, 564-2, 565-1, 565-2, 566, 567), qui contient l'artefact (121-123),
- lors de la réalisation de la réduction d'artefact, pour chaque image de mesure (501, 502) : la suppression de l'artefact sur la base de la région d'artefact.

**3.** Procédé selon la revendication 2,

l'impureté (120) comprenant des diffuseurs et des absorbeurs,
le module d'éclairage (180) étant commandé pour chaque image de mesure (501, 502) pour éclairer l'objet (125) depuis au moins deux directions d'éclairage de référence associées (411-413, 421-423, 431-433),
le procédé comprenant en outre :

- lors de la réalisation de la réduction d'artefact, pour chaque image de correction (563, 563-1, 563-2, 564, 564-1, 564-2, 565-1, 565-2, 566, 567) : la correction de la région d'artefact respective sur la base de la région d'artefact d'une autre image de correction (563, 563-1, 563-2, 564, 564-1, 564-2, 565-1, 565-2, 566, 567).

4. Procédé selon la revendication 1, qui comprend en outre :

 - pour chaque image de mesure (501, 502) : la commande du module d'éclairage (180) pour éclairer l'objet (125) depuis une séquence associée (499) de directions d'éclairage de référence (411-413, 421-423, 431-433),
 - pour chaque direction d'éclairage de référence (411-413, 421-423, 431-433) : la commande du détecteur (101) pour acquérir une image de référence (551-558) de l'objet (125),
 - lors de la réalisation de la réduction d'artefact, pour chaque image de mesure (501, 502) : l'identification d'un mouvement de l'artefact en fonction de la séquence respective (499) des directions d'éclairage de référence (411-413, 421-423, 431-433) dans les images de référence associées (551-558) et la réduction d'artefact respective étant sur la base du mouvement identifié respectif de l'artefact.

5. Procédé selon la revendication 4, qui comprend en outre :

 - lors de la réalisation de la réduction d'artefact, pour chaque image de mesure (501, 502) : la combinaison de l'image de mesure respective (501, 502) avec au moins l'une des images de référence associées (551-558) sur la base du mouvement identifié de l'artefact.

6. Procédé selon l'une quelconque des revendications précédentes,

 l'au moins une direction d'éclairage de mesure (111-114), qui est associée à une image de mesure sélectionnée (501, 502), formant avec les autres directions d'éclairage de mesure (111-114) un premier angle moyen,
 l'au moins une direction d'éclairage de mesure (111-114), qui est associée à l'image de mesure sélectionnée (501, 502), formant avec l'au moins une direction d'éclairage de référence associée (411-413, 421-423, 431-433) un deuxième angle moyen qui est plus petit que le premier angle moyen.

7. Procédé selon l'une quelconque des revendications précédentes,
 l'au moins une direction d'éclairage de mesure (111-114), qui est associée à l'image de mesure sélectionnée (501, 502), et l'au moins une direction d'éclairage de référence associée (411-413, 421-423, 431-433) correspondant à des sources de lumière (182) du module d'éclairage (180) les plus proches les unes des autres.

8. Procédé selon l'une quelconque des revendications précédentes,
 les directions d'éclairage de référence (411-413, 421-423, 431-433) étant au moins partiellement différentes des directions d'éclairage de mesure (111-114) .

9. Procédé selon l'une quelconque des revendications précédentes, qui comprend en outre :

 - la commande d'un porte-échantillon (102) du dispositif optique (100), qui est adapté pour fixer l'objet (125) sur le trajet du faisceau du dispositif optique (100), pour focaliser l'objet (125).

10. Procédé selon l'une quelconque des revendications précédentes,
 la réduction d'artefact étant réalisée plusieurs fois de manière itérative pour chaque image de mesure (501, 502).

11. Procédé selon l'une quelconque des revendications précédentes,
 la réalisation de la réduction d'artefact étant effectuée en temps réel.

12. Dispositif optique (100), qui comprend :

 - un porte-échantillon (102), qui est adapté pour fixer un objet (125) dans le trajet du faisceau du dispositif optique (100),
 - un module d'éclairage (180), qui comprend plusieurs sources de lumière (182) et est adapté pour éclairer l'objet (125) depuis plusieurs directions d'éclairage en actionnant les sources de lumière (182),
 - un détecteur (101), qui est agencé sur le trajet du faisceau du dispositif optique (100),
 - une unité de calcul (103), qui est adaptée pour commander le module d'éclairage (180) pour éclairer un objet (125) depuis plusieurs directions d'éclairage de mesure (111-114),

l'unité de calcul (103) étant en outre adaptée pour commander le détecteur (101) pour acquérir des images de mesure (501, 502) de l'objet (125), les images de mesure (501, 502) étant associées aux directions d'éclairage de mesure (111-114),

l'unité de calcul étant en outre adaptée, pour chaque image de mesure (501, 502), pour commander le module d'éclairage (180) pour éclairer l'objet (125) depuis au moins une direction d'éclairage de référence associée, la direction d'éclairage de référence étant différente de la direction d'éclairage de mesure, et l'unité de calcul est en outre adaptée, pour chaque direction d'éclairage de référence, pour commander le détecteur pour acquérir une image de référence (551-558) de l'objet,

l'unité de calcul (103) étant en outre adaptée, pour chaque image de mesure (501, 502), pour réaliser une réduction d'artefact, qui réduit un artefact (121-123) dans l'image de mesure respective (501, 502) en raison d'une impureté (120) agencée de manière défocalisée,

l'unité de calcul étant adaptée, lors de la réalisation de la réduction d'artefact pour chaque image de mesure (501, 502), pour combiner l'image de mesure respective (501, 502) avec l'au moins une image de référence associée (551-558) pour obtenir au moins une image de correction, qui est indicative de l'artefact,

l'unité de calcul (103) étant en outre adaptée pour, après la réalisation de la réduction d'artefact pour toutes les images de mesure (501, 502), combiner les images de mesure (501, 502) pour obtenir une image de résultat (601).

13. Dispositif optique (100) selon la revendication 12,
le dispositif optique (100) étant adapté pour réaliser le procédé selon l'une quelconque des revendications 1 à 11.

**FIG. 1A**

**FIG. 1B**

**FIG. 2**

**FIG. 3A**

FIG. 3B

FIG. 4

**FIG. 5**

**FIG. 6**

**FIG. 7**

| Beleuchtungsmodul | Probenhalter | Detektor |

| Recheneinheit |

**FIG. 8**

FIG. 9

FIG. 10

**FIG. 11**

FIG. 12

**FIG. 13**

**FIG. 14**

1001 Ansteuern Beleuchtungsmodul

1002 Ansteuern Detektor
zum Erfassen von Messbild

1003 Weiteres
Messbild?    JA

NEIN

1004 Durchführen Artefaktreduktion

1005 Kombiniere Messbilder
zum Erhalten von Ergebnisbild

**FIG. 15**

1011

Wähle Referenz-Beleuchtungsrichtungen
für aktuelles Messbild

1012

Ansteuern Beleuchtungsmodul

1013

Ansteuern Detektor
zum Erfassen von Referenzbild

1014

Weiteres
Referenzbild?

JA

NEIN

1015

JA

Weiteres
Messbild?

NEIN

**FIG. 16**

**FIG. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014112242 A1

- DE 102014109687 A1

**In der Beschreibung aufgeführte Nicht-Patentliteratur**

- **XUE, T. ; RUBINSTEIN M. ; LIO C. ; FREEMAN W. T.** A computational approach for obstruction-free photography. *ACM Trans. Graph. Proc. ACM SIG-GRAPH 2015,* 2015, vol. 34, 79